(19) Europäisches Patentamt
European Patent Office
Office européen des brevets

(11) **EP 2 016 471 B1**

(12) **EUROPÄISCHE PATENTSCHRIFT**

(45) Veröffentlichungstag und Bekanntmachung des Hinweises auf die Patenterteilung:
**31.03.2010 Patentblatt 2010/13**

(21) Anmeldenummer: **06762931.1**

(22) Anmeldetag: **01.08.2006**

(51) Int Cl.:
*G05B 19/19* (2006.01)      *G05D 3/12* (2006.01)

(86) Internationale Anmeldenummer:
**PCT/EP2006/007607**

(87) Internationale Veröffentlichungsnummer:
**WO 2008/014804 (07.02.2008 Gazette 2008/06)**

(54) **VERFAHREN ZUM KOORDINIEREN VON ANTRIEBSANORDNUNGEN EINER WERKZEUGMASCHINE, BAHNPLANUNGSEINHEIT UND ZUGEHÖRIGE WERKZEUGMASCHINE**

METHOD FOR COORDINATING DRIVE ARRANGEMENTS IN A MACHINE TOOL, TRACK DESIGN UNIT AND ASSOCIATED MACHINE TOOL

PROCÉDÉ POUR COORDONNER DES DISPOSITIFS D'ENTRAÎNEMENT D'UNE MACHINE-OUTIL, UNITÉ DE PLANIFICATION DE VOIE ET MACHINE-OUTIL CORRESPONDANTE

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**21.01.2009 Patentblatt 2009/04**

(73) Patentinhaber: **TRUMPF Werkzeugmaschinen GmbH + Co. KG**
**71254 Ditzingen (DE)**

(72) Erfinder: **BOETTCHER, Christian**
**70565 Stuttgart (DE)**

(74) Vertreter: **Kohler Schmid Möbus Patentanwälte**
**Ruppmannstraße 27**
**70565 Stuttgart (DE)**

(56) Entgegenhaltungen:
EP-A- 1 688 807      DE-A1- 3 803 032
US-A1- 5 801 939

- **LUTTRELL, D.; DOW, T.A.: "CONTROL OF PRECISE POSITIONING SYSTEM WITH CASCADE COLLINEAR ACTUATORS" PROC. OF THE AMERICAN CONTROL CONF., 15. Juni 1988 (1988-06-15), - 17. Juni 1998 (1998-06-17) Seiten 121-126, XP009081090**
- **STAROSELSKY S ET AL INSTITUTE OF ELECTRICAL AND ELECTRONICS ENGINEERS AMERICAN AUTOMATIC CONTROL COUNCIL: "TWO-STAGE ACTUATION FOR IMPROVED ACCURACY OF CONTOURING" PROCEEDINGS OF THE AMERICAN CONTROL CONFERENCE. ATLANTA, JUNE 15 - 17, 1988, NEW YORK, IEEE, US, Bd. VOL. 1 CONF. 7, 15. Juni 1988 (1988-06-15), Seiten 127-132, XP000012249**
- **OREN MASORY ET AL: "TWO-STAGE ACTUATION CONTROL SYSTEM FOR CNC CONTOURING SYSTEMS" PROCEEDINGS OF THE AMERICAN CONTROL CONFERENCE (ACC). CHICAGO, JUNE 24, Bd. VOL. 1, 24. Juni 1992 (1992-06-24), Seiten 375-378, XP000340609 ISBN: 0-7803-0210-9**

**Beschreibung**

Die vorliegende Erfindung betrifft ein Verfahren zum Koordinieren von in unterschiedlichen Achsrichtungen wirkenden Antriebsanordnungen einer Werkzeugmaschine, umfassend die Schritte: Vorgeben eines ersten Sollwerts für einen ersten geregelten Achsantrieb einer in einer ersten Achsrichtung wirkenden, ersten Antriebsanordnung, sowie Vorgeben eines Regelfaktors für das Zuführen einer zu einem Regelfehler des ersten geregelten Achsantriebs proportionalen Größe an wenigstens einen zweiten geregelten Achsantrieb der ersten Antriebsanordnung, sowie eine Bahnplanungseinheit zur Durchführung des Verfahrens. Weiterhin betrifft die Erfindung eine Werkzeugmaschine mit: einer in einer ersten Achsrichtung wirkenden Antriebsanordnung, die einen ersten Achsantrieb mit einem zugeordneten Regler aufweist, einer Steuerungseinheit zur Vorgabe eines Sollwerts an den Regler des ersten Achsantriebs, sowie Mittel zum Zuführen einer zu einem Regelfehler des ersten Achsantriebs proportionalen Größe an wenigstens einen zweiten Achsantrieb der ersten Antriebsanordnung oder einen dem zweiten Achsantrieb zugeordneten Regler.

Ein derartiges Verfahren und eine derartige Werkzeugmaschine sind beispielsweise in der Patentanmeldung EP 05 002 414 der Anmelderin oder in dem Artikel "Twostage Actuation for Improved Accuracy of Contouring" von Staroselsky et al., Proceedings of the 1998 American Control Conference, Atlanta, June 15-17, 1998, Bd. 1, S. 127 - 132 beschrieben. Aus der US 5,801,939 ist darüber hinaus eine Vorrichtung zur präzisen Positionsregelung bekannt geworden, die einen Grobpositionierer, einen Feinpositionierer, ein Summierwerk zum Summieren der Auslenkungen des Grob- und des Feinpositionierers, sowie weitere Regelungselemente aufweist.

Gegenstand der folgenden Ausführungen sind Werkzeugmaschinen, deren kinematischer Aufbau eine Anzahl n von Achsrichtungen zum Nachfahren einer vorgegebenen Bahnkurve umfasst, wobei in jeder Achsrichtung jeweils eine Antriebsanordnung wirkt. Eine beliebige Zahl, mindestens aber eine Antriebsanordnung ist ausgeführt durch zwei oder mehr einzelne, geregelte Achsantriebe (a, b), welche sowohl kinematisch als auch die einzelnen Messsysteme betreffend hintereinander liegend angeordnet sind. Am Wirkungsort (Werkzeugeihgriffspunkt) ergibt sich eine kinematische Überlagerung in der betreffenden Achsrichtung. Als Achsrichtungen werden hierbei sowohl translatorische Achsen als auch rotatorische Achsen bezeichnet. Sind letztere z.B. über ein Gelenk miteinander verbunden, ist gegebenenfalls eine Transformation von Raum- in Maschinenkoordinaten und zurück erforderlich.

Im Folgenden werden die Achsantriebe auch kurz als Achsen (a, b) bezeichnet. Als Achsen dienen vorliegend bevorzugt Servoantriebe, d.h. Antriebe mit hoher Dynamik (schnellem Beschleunigen und Abbremsen) sowie guter Genauigkeit beim Erreichen der Sollwerte. Bei den hier beschriebenen Servoantrieben sind die Antriebsebenen kaskadiert, sodass nur Sollwerte für die Positionen vorgegeben werden müssen. Alternativ kann aber auch eine direkte Regelung der unterlagerten Regelkreise (Drehzahl- bzw. Stromregelung) vorgenommen werden (sog. Vorsteuerung). Hierbei wird der Lageregler bzw. (für den Strom) der Drehzahlregler umgangen und wirkt nur noch für die Abweichungen.

Was die Anordnung der Achsen (a,b) angeht, sind mehrere Varianten möglich. So ist es beispielsweise möglich, dass beide Achsen (a, b) einzeln aufgebaut sind, etwa wenn sich Werkzeug und Werkstück bewegen sollen. Alternativ kann eine Achse (etwa b) auf der anderen Achse (dann a) aufgebaut sein, also deren Bewegung mit ausführen. Im Vordergrund des Interesses stehen momentan Aufbauten, bei welchen Zusatzachsen mit hoher Dynamik und geringen Verfahrbereichen angeordnet sind auf Grundachsen mit großen Verfahrbereichen und geringerer Dynamik.

Die entlang weiterer Achsrichtungen wirkenden Antriebsanordnungen können entweder als Einzelachsen aufgebaut sein, oder ebenfalls zwei oder mehr Achsen umfassen, die wie oben im Zusammenhang mit der ersten Achsrichtung beschrieben gekoppelt sind. Im Folgenden werden zwei beliebige Achsrichtungen i, j aus der Anzahl n von Achsrichtungen herausgegriffen, wobei die Antriebsanordnung der ersten Achsrichtung i zwei Achsen umfasst, wohingegen die Antriebsanordnung der zweiten Achsrichtung j eine einzelne Achse aufweist.

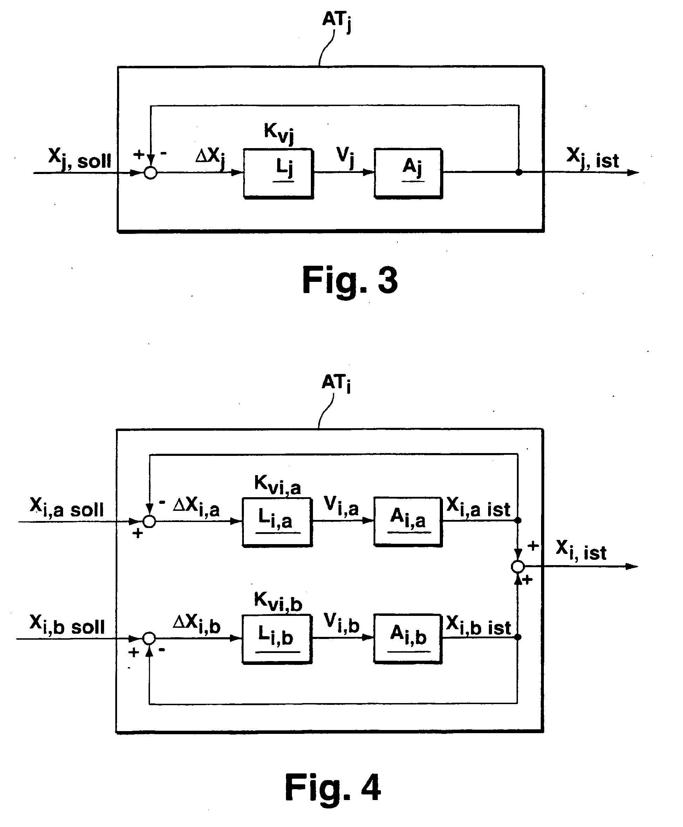

In **Fig. 3** ist der Signalflussplan einer solchen lageregelten Antriebsanordnung $AT_j$ mit einer Einzelachse in der zweiten Achsrichtung **j** in einer stark vereinfachten Darstellungsweise gezeigt. In dieser Darstellung sind die unterlagerten Strom- und Geschwindigkeitsregelkreise sowie die mechanischen Übertragungsglieder zum Achsantrieb $A_j$ zusammengefasst. Der Antriebsanordnung $AT_j$ wird ein NC-Lagesollwertvorgabe $x_{j,soll}$ von einer nicht bildlich dargestellten numerischen Steuerungseinheit vorgegeben. Der Antrieb $A_j$ fährt eine Position $x_{j,ist}$ an. Diese Position dient als Regelgröße $x_{j,ist}$ für einen Lageregler $L_j$, dem der Regelfehler $\Delta x_j$, d.h. die Differenz aus Regelgröße $x_{j,ist}$ und Sollwert $x_{j,soll}$, als Eingangsgröße zugeführt wird. Der Lageregler $L_j$ ermittelt aus dem Regelfehler $\Delta x_j$ eine Geschwindigkeit des Achsantriebs $A_j$ als Stellgröße $v_j$, indem der Regelfehler $\Delta x_j$ mit einem Verstärkungsfaktor $Kv_j$ multipliziert wird.

In **Fig. 4** ist der entsprechende Signalflussplan einer Antriebsanordnung $AT_i$ der ersten Achsrichtung i mit zwei Einzelachsen a und b gezeigt, die ohne besondere Maßnahmen zusammenwirken. Die Lagesollwertvorgabe erfolgt hier für einen ersten und einen zweiten Achsantrieb $A_{i,a}$, $A_{i,b}$ getrennt, d.h. von einem ersten Sollwert $x_{i,a}$ soll wird eine erste Position $x_{i,a\,ist}$ als Regelgröße zur Bildung eines auch als Schleppfehler bezeichneten Regelfehlers $\Delta x_{i,a}$ subtrahiert und einem dem Antrieb $A_{i,a}$ zugeordneten Regler $L_{i,a}$ zugeführt, welcher eine Stellgröße $v_{i,a}$ für den Antrieb $A_{i,a}$ durch Multiplikation mit einem Verstärkungsfaktor $Kv_{i,a}$ ermittelt. Eine Regelung einer zweiten Regelgröße $x_{i,b}$ ist wird entsprechend für den zweiten Antrieb $A_{i,b}$ durchgeführt. Die beiden Positionen $X_{i,a\,ist}$ und $X_{i,b\,ist}$ überlagern sich anschließend zu einer Gesamt-Position $x_{i,ist}$ entlang der ersten Achsrichtung i.

Wird eine Werkzeugmaschine mit den in Fig. 3 und Fig. 4 gezeigten Achsaufbauten entlang der zwei Achsrichtungen i, j (bzw. mit beliebig vielen weiteren Achsrichtungen) mit Bahnsollwerten (interpolierend) durch eine NC-Steuerung angesteuert, entstehen unweigerlich Bahnverzerrungen infolge von Ungereimtheiten der Schleppfehler der Einzelachsen. Diese Bahnverzerrungen bilden sich als maßliche Fehler auf den bearbeiteten Werkstücken ab und sie entstehen auch, wenn die Frequenzgänge der Achsen bestmöglich aufeinander abgestimmt sind.

Für die Korrektur von Bahnverzerrungen bei mehreren Antrieben entlang einer Achsrichtung ist es aus der oben genannten Patentanmeldung EP 05 002 414 bekannt, einen Anpass- bzw. Regelfaktor zu verwenden, der die Wirkung der höher dynamischen Achse auf das für ein gutes Bahnverhalten benötigte Maß begrenzt. Hierzu wird bei der in Fig. 4 gezeigten Anordnung eine zum Regelfehler $\Delta x_{i,a}$ des ersten Achsantriebs $A_{i,a}$ proportionale Größe, d.h. der mit einem Anpassfaktor multiplizierte Regelfehler $\Delta x_{i,a}$, dem zweiten Achsantrieb $A_{i,b}$ an einem Summationspunkt zugeführt, an dem auch der Sollwert $x_{i,b\ soll}$ zugeführt wird. In dieser Druckschrift ist jedoch nicht angegeben, wie dieser Anpassfaktor festgelegt werden soll.

Aufgabe der Erfindung

Es ist die Aufgabe der vorliegenden Erfindung, ein Verfahren, eine Bahnplanungseinheit zur Durchführung des Verfahrens sowie eine Werkzeugmaschine der eingangs genannten Art dahingehend weiterzubilden, dass die oben beschriebenen Bahnverzerrungen weitestgehend vermieden werden können.

Gegenstand der Erfindung

Diese Aufgabe wird erfindungsgemäß gelöst durch Vorgeben des Regelfaktors in Abhängigkeit von einem dem ersten Achsantrieb vorgegebenen Verstärkungsfaktor und einem dem zweiten Achsantrieb vorgegebenen Verstärkungsfaktor, wobei der dem zweiten Achsantrieb vorgegebene Verstärkungsfaktor einen effektiven Verstärkungsfaktor für die erste Antriebsanordnung und mindestens eine weitere, in einer zweiten Achsrichtung wirkende Antriebsanordnung bildet.. Üblicherweise wird nicht nur die zweite, sondern alle zum Nachfahren einer vorgegebenen Bahnkurve verwendeten Antriebsanordnungen mit demselben effektiven Verstärkungsfaktor beaufschlagt, wodurch die oben beschriebenen Bahnverzerrungen wirksam reduziert werden können. Weiterhin wird durch die oben beschriebene Festlegung des Regelfaktors die Wirkung der höher dynamischen Achse auf das für ein gutes Bahnverhalten benötigte Maß begrenzt. Unter dem Vorgeben von Verstärkungsfaktoren kann je nach Anwendungsfall verstanden werden, dass diese für das Nachfahren einer vorgegebenen Bahnkurve von Anfang an fest eingestellt werden oder dass diese variabel vorgegeben werden, d.h. in Abhängigkeit von der Position entlang der Bahnkurve veränderlich sind.

Der effektive Verstärkungsfaktor wird bei einer weiteren Antriebsanordnung in der zweiten Achsrichtung, welche nur eine einzige Achse aufweist (vgl. Fig. 3), zum Verstärkungsfaktor des zugehörigen einzelnen Antriebs, d.h. $Kv_j = Kv_e$. Weist die weitere Antriebsanordnung zwei Achsantriebe auf, wird der effektive Verstärkungsfaktor dem zweiten bzw. dem schnellsten geregelten Achsantrieb als Verstärkungsfaktor vorgegeben. Die weitere Antriebsanordnung ist hierbei analog zu der in der ersten Achsrichtung wirkenden Antriebsanordnung aufgebaut, d.h. dem zweiten Achsantrieb dieser Antriebsanordnung wird ebenfalls eine zum Regelfehler des ersten Achsantriebs proportionale Größe zugeführt, welche von dem für alle Achsrichtungen einheitlichen, effektiven Verstärkungsfaktor und dem Verstärkungsfaktor des ersten in der zweiten Achsrichtung wirkenden Achsantriebs abhängt.

Bei mehreren Antrieben entlang einer Achsrichtung (z.B. i) ist der effektive Verstärkungsfaktor definiert als derjenige Verstärkungsfaktor, der sich bei der Verwendung eines einzigen Antriebs in dieser Achsrichtung ergeben würde, d.h. für zwei Antriebe (a, b) in Achsrichtung i, welche jeweils eine Lageregelung mit Verstärkungsfaktor $Kv_{i,a}$ bzw. $Kv_{i,b}$ aufweisen stehen diese Größen folgendermaßen mit dem effektiven Verstärkungsfaktor $Kv_e$ in Beziehung:

$$\Delta x_{i,a}\, Kv_{i,a} + \Delta x_{i,b}\, Kv_{i,b} = (\Delta x_{i,a} + \Delta x_{i,b})\, Kv_e = \Delta x_i\, Kv_e. \quad (*)$$

Steht $Kv_e$ fest, so können $Kv_{i,a}$ oder $Kv_{i,b}$ aus (*) bestimmt werden. Für gewöhnlich wird $Kv_e$ von einer numerischen Steuerung festgelegt. Soll $Kv_e$ in Abhängigkeit von der Position entlang der Bahnkurve variabel sein, muss er bereits bei der Bahnplanung festgelegt werden, was in einer Bahnplanungseinheit geschieht (s.u.). Durch die oben beschriebene Vorgabe eines identischen effektiven Verstärkungsfaktors $Kv_e$ entlang aller Achsrichtungen wirken die Antriebsanordnungen auf die gleiche Weise, unabhängig davon, wie viele Achsen die Antriebsanordnungen aufweisen. Hierdurch können die oben genannten Bahnverzerrungen weitgehend unterbunden werden, wobei die Bauweise der geregelten NC- Achsen keine Rolle spielt, sodass diese in allen bekannten Bauweisen ausgeführt sein können, also beispielsweise auch als Direktantriebe.

Der numerischen Steuerung der Werkzeugmaschine ist zur Vorgabe des Sollwertes, des Regelfaktors sowie der Verstärkungsfaktoren und ggf. weiterer Größen in der Regel ein im Folgenden als Bahnplanungseinheit bezeichneter Funktionsbaustein zugeordnet. Der Bahnplanungseinheit sind sämtliche relevante Größen zum Bewegungsvermögen der einzelnen Achsen sowie von deren Regelkreisen (Maximalwerte für das Erreichen einer gewünschten Genauigkeit) bekannt. Aus dem Teileprogramm, das die zu bearbeitende Werkstückgeometrie umfasst (alternativ kann auch eine geteachte Bahn zu Grunde gelegt werden), wird ermittelt und festgelegt, welche Bewegungsbestandteile an die Achsrichtungen ausgegeben werden sollen, in der Weise, dass die Bahnbewegung zeitlich und bezüglich der Präzision optimiert erfolgt. Dabei werden in der Bahnplanungseinheit für das Zusammenspiel aller Maschinenachsen Transformationen (von Raum- in Maschinenachsen und zurück), sowie Interpolationsalgorithmen zur Lagesollwertvorgabe an die einzelnen Achsen nach bekannten Verfahren bewerkstelligt. Die Bahnplanungseinheit liefert somit einen Parametersatz für das optimierte Nachfahren der Bahnkurve, welcher bei der Ausführung des Bewegungsprogramms von einer numerischen Steuerungseinheit zur Lageregelung der Achsantriebe herangezogen wird. Die Bahnplanungseinheit koordiniert somit die in unterschiedliche Richtungen wirkenden Antriebsanordnungen vor dem Nachfahren der Bahnkurve.

Bei einer bevorzugten Variante des erfindungsgemäßen Verfahrens wird ein zweiter Sollwert für den zweiten Achsantrieb vorgegeben, wobei eine Aufteilung eines gemeinsamen Sollwerts für die erste Antriebsanordnung in den ersten und zweiten Sollwert in Abhängigkeit von den Eigenschaften der Achsantriebe und einer vorgegebenen Bahnkurve zur Bewegung eines durch die Antriebsanordnungen bewegten Werkzeugs und/oder Werkstücks erfolgt.

Die Bahnplanungseinheit nimmt neben der Aufteilung der Bewegungsbestandteile in verschiedene Achsrichtungen zusätzlich die Aufteilung der Bewegung in einer Achsrichtung auf zwei oder mehr Einzelachsen vor. Hierbei werden die kinematischen Mehrdeutigkeiten bezüglich der resultierenden Sollpositionen, welche durch das Vorhandensein der zwei oder mehr Achsen in einer Achsrichtung entstehen, aufgelöst. Dies erfolgt durch Festlegung der Kopplung der Einzelachsen (a, b) sowie durch die genau geplante Vorgabe der Lagesollwerte für die zu verfahrende Bahn unter Berücksichtigung und optimierter Abstimmung auf die physikalischen Bewegungsmöglichkeiten (Begrenzungen) der Einzelachsen. Bei Vorhandensein von mehr als zwei Einzelachsen wird der gemeinsame Sollwert selbstverständlich in drei oder mehr Sollwertanteile aufgeteilt.

Die in ihrer Wirkung hintereinander geschalteten, kinematisch gekoppelten Einzelachsen sind dabei so ausgeführt, dass sie einzeln Positionen in der erwarteten Präzision anfahren und halten können. Es geht hier also nicht darum, bauartbedingte Achsungenauigkeiten oder etwa auch Werkstückabweichungen separat (durch einen eigenen Sensor) zu erfassen und mit der gekoppelten Zusatzachse zu kompensieren. Dennoch kann das beschriebene Verfahren auch für diese Aufgabenstellung vorteilhaft angewendet werden. In diesem Fall wird z.B. keine eigene Sollbahn für die zweite Einzelachse interpoliert, sondern deren Sollposition konstant auf Null gehalten. Somit fungiert die als Zusatzachse geschaltete zweite Achse als eine Vorlaufachse rein zur Reduktion des Schleppabstandes, um $Kv_e$ zu erreichen. Selbstverständlich kann dies für eine, mehrere oder sämtliche Achsrichtungen der Werkzeugmaschine erfolgen.

Vorzugsweise wird der Betrag des effektiven Verstärkungsfaktors zwischen einem für den ersten Achsantrieb optimierten Verstärkungsfaktor und einem für den zweiten Achsantrieb optimierten Verstärkungsfaktor vorgegeben, wobei "zwischen" dahingehend zu interpretieren ist, dass die Intervallgrenzen mit umfasst sind. Die optimierten Verstärkungsfaktoren stellen hierbei die maximal möglichen, nach den üblichen Optimierungskriterien - ohne Berücksichtigung einer Kopplung der Einzelachsen - bestimmten Werte dar, welche der Bahnplanungseinheit bzw. der numerischen Steuerungseinheit bekannt sind.

Bei einer besonders vorteilhaften Verfahrensvariante wird die Position der Achsantriebe geregelt, wobei als Stellgrößen die Geschwindigkeiten der Achsantriebe eingestellt werden. Dies entspricht dem typischen Anwendungsfall mit kaskadierten Regelkreisen. Es existieren aber auch andere Regelverfahren für die Servoachsen, die das Ziel haben, die sich einstellenden Schleppabstände zu verkleinern und damit die tatsächlich wirksamen Kv-Faktoren zu vergrößern. Beispielsweise können Drehzahl und Strom eines (bzw. aller) Antriebe von der Steuerung direkt als Sollwerte für die betreffenden Regler vorgegeben werden. Der zugehörige Lageregler wird damit (evtl. teilweise) umgangen und agiert nur noch für verbleibende Abweichungen. Das hier beschriebene Verfahren wird bei Anwendung von nicht kaskadierten Antriebsregelungen analog angewandt mit den tatsächlich wirksamen Kv-Faktoren aus $Kv = v / \Delta x$ bzw. $v / \Delta s$.

Bei einer weiteren vorteilhaften Variante ist der zweite Achsantrieb auf dem ersten Achsantrieb aufgebaut und wird mit diesem mitbewegt. Dies entspricht dem Fall einer weniger dynamischen Grundachse mit großem Verfahrweg (erster Achsantrieb), auf dem eine Zusatzachse mit geringerem Verfahrweg (zweiter Achsantrieb) aufgebaut ist. Im Folgenden wird der erste Achsantrieb als langsamer Achsantrieb bezeichnet, der zweite Achsantrieb als schneller Achsantrieb, wobei diese Zuordnung selbstverständlich auch umgekehrt vorgenommen werden könnte.

Bei einer bevorzugten Weiterbildung dieser Variante wird der erste Achsantrieb von dem zweiten Achsantrieb ganz oder teilweise impulsentkoppelt. Bei aufeinander aufgebauten Achsantrieben wird bei der Beschleunigung eines der Achsantriebe eine Kraft auf den anderen Achsantrieb ausgeübt, die durch die Impulsentkopplung kompensiert wird. Dies kann durch eine gegenläufige Bewegung einer zur Kompensation vorgesehenen Masse unter Berücksichtigung der relativen Massen der Antriebe geschehen (sog. Massenausgleich). Alternativ oder zusätzlich kann der zweite Achsantrieb hierzu auch über ein elastisches Federmittel oder ein Dämpfungsmittel am ersten Achsantrieb befestigt werden, wie beispielsweise in der DE 198 10 996 A1 beschrieben, die durch Bezugnahme in ihrer Gesamtheit zum Inhalt dieser Anmeldung gemacht wird. Durch die Impulsentkopplung ist die Bewegung des zweiten Achsantriebs rückwirkungsfrei bezogen auf den ersten Achsantrieb, sodass zur Bestimmung der Regelfaktoren der Achsantriebe die bekannten Optimierungskriterien ohne Berücksichtigung störender Effekte angewendet werden können. Es ist auch möglich, auf die Impulsentkopplung ganz oder teilweise zu verzichten, wenn bezogen auf die auszuführenden Bewegungen die Einzelachsen in ihrem Störverhalten so ausgeführt sind, dass die Rückwirkungen der Achsen a und b aufeinander tolerierbare Abweichungen ergeben.

Bei einer Weiterbildung dieser Variante werden aus der Masse und Beschleunigung des ersten Achsantriebs und/oder der Masse und Beschleunigung des zweiten Achsantriebs Korrekturwerte für das Zuführen an einen Stromregler und/oder einen Drehzahlregler des ersten und/oder zweiten Achsantriebs erzeugt. Diese Variante ist vorteilhaft, wenn keine oder eine teilweise Impulsentkopplung durchgeführt wird und die Achsen zu schwer und zu träge sind, sodass Abweichungen entstehen, die nicht mehr im Toleranzbereich liegen. In diesem Fall werden aus den durch die Interpolation bekannten Beschleunigungen $a_a$ und $a_b$ sowie den Massen der Achsen ($m_a$ und $m_b$) von der Bahnplanungseinheit oder der numerischen Steuerungseinheit Korrekturwerte generiert, die den Stromreglern, evtl. auch den Drehzahlreglern der Achsantriebe vorsteuernd wechselseitig aufgeschaltet werden.

Bei einer weiteren, besonders bevorzugten Variante wird für die Bewegung eines durch die Antriebsanordnungen bewegten Werkzeugs und/oder Werkstücks entlang einer vorgegebenen Bahnkurve der effektive Verstärkungsfaktor und/oder der dem ersten Achsantrieb vorgegebene Verstärkungsfaktor in Abhängigkeit von der Position entlang der Bahnkurve verändert. Für gewöhnlich werden die Verstärkungsfaktoren als Regelparameter für eine durch das Teileprogramm vorgegebene Bahnkurve vorab in einer numerischen Steuerung festgelegt und bleiben entlang der Bahnkurve konstant. Durch das Planen der Bahn mit abschnittsweise auf das aktuelle Teileprogramm optimierten Parametersätzen für die Verstärkungsfaktoren im Zusammenspiel mit den Lagesollwerten der Bahnkurve kann das maximale Bewegungsvermögen der Einzelachsen optimal ausgeschöpft werden. Im Sinne der Regelungstechnik ist es aufgrund der sich beim Nachfahren der Bahnkurve ergebenden Zeitabhängigkeit der Verstärkungsfaktoren nicht mehr korrekt, von Kv-Faktoren zu sprechen. Es wird aus Verständnisgründen dennoch getan, weil diese Begriffe allgemein bekannt sind.

Bei einer weiteren, besonders vorteilhaften Variante wird der effektive Verstärkungsfaktor in Bahnabschnitten erhöht, in denen zumindest in einer Achsrichtung keine Bewegung erfolgt. Wenn eine (oder mehrere) Achsrichtungen nicht an der Bewegung beteiligt sind, ergeben sich durch diese keine Bahnverzerrungen. Indem temporär Stabilitätsreserven des Lageregelkreises von weniger dynamischen Achsen ausgenutzt werden, lässt sich somit $Kv_e$ ohne negative Effekte erhöhen.

Bei einer besonders vorteilhaften Variante wird eine Stellgröße $V_{i,a}$ des ersten Achsantriebs in der ersten Achsrichtung ermittelt als: $v_{i,a} = Kv_{i,a} \Delta x_{i,a}$, und eine Stellgröße $v_{i,b}$ des zweiten Achsantriebs als

$$v_{i,b} = (Kv_e - Kv_{i,a}) \Delta x_{i,a} + Kv_e \Delta x_{i,b}, \quad (\text{**})$$

wobei $\Delta x_{i,a}$, $\Delta x_{i,b}$ die Regelfehler des ersten und zweiten Achsantriebs bezüglich der Sollwerte $X_{i,a\ soll}$, $X_{i,b\ soll}$ bezeichnen, $Kv_{i,a}$ der Verstärkungsfaktor des ersten Achsantriebs der ersten Antriebsanordnung in der ersten Achsrichtung ist, und $Kv_e$ den effektiven Verstärkungsfaktor bezeichnet. Unter der oben für $v_{i,b}$ angegebenen Formel werden auch äquivalente Gleichungen, die sich aus dieser durch algebraische Umformungen herleiten lassen, beispielsweise

$$v_{i,b} = (Kv_e - Kv_{i,a}) / Kv_e \Delta x_{i,a} + \Delta x_{i,b} ) Kv_e, \quad (\text{***})$$

verstanden. Die algebraisch äquivalenten Formulierungen (**) und (***) werden regelungstechnisch unterschiedlich umgesetzt (s.u.).

Bei einer besonders vorteilhaften Variante weisen die langsamsten und/oder die schnellsten Achsantriebe der Antriebsanordnungen aller Achsrichtungen der Werkzeugmaschine denselben Verstärkungsfaktor zum Ermitteln einer Stellgröße aus einer Regelgröße auf und haben bevorzugt identischen Frequenzgang. Für besonders hohe Anforderungen bezüglich geringer verbleibender Bahnabweichungen sollten die Einzelachsen (a, b) aller Maschinen-Achsrichtungen aufeinander abgestimmt werden. Eine solche Abstimmung aller Achsen ergibt sich automatisch, wenn die langsamsten und/oder die schnellsten Achsantriebe wie oben beschrieben aufeinander abgestimmt werden.

Bei einer besonders vorteilhaften Variante wird ein Sollwert des ersten und/oder des zweiten Achsantriebs zumindest der ersten Antriebsanordnung mit einem Sensorregelsignal modifiziert. Der Antriebsanordnung ist ein Sensor zugeordnet, welcher Abweichungen der momentanen Positionierung, der die programmierte Nennbahn zu Grunde liegt (also auch verbleibende Abweichungen der Achsen), von einer Sollbahn, etwa einer mit Oberflächenabweichungen versehenen Werkstückkontur ermittelt. Ein beliebiger "Off-Set"-Wert ist in dem Sollwert bereits beinhaltet; entsprechend z. B. dem Nennabstand Düse-Blech bei der Abstandsregelung einer Werkzeugmaschine zur Laserbearbeitung eines Werkstücks.

Die Erfindung ist auch realisiert in einer Bahnplanungseinheit, umfassend ein Computerprogrammprodukt zur Durchführung aller Schritte des oben beschriebenen Verfahrens. Der Bahnplanungseinheit werden die Kenndaten der Werkzeugmaschine (z.B. mechanische Begrenzungen der Achsantriebe) sowie das Teileprogramm, d.h. die zu erzeugende Bahnkurve, vorgegeben. Aus diesen Daten bestimmt die Bahnplanungseinheit einen Parametersatz für die Sollwerte der einzelnen Achsen, den effektiven Verstärkungsfaktor, sowie die Geschwindigkeitsverstärkungen der Einzelachsen. Der Parametersatz kann von der Bahnplanungseinheit gespeichert und nachfolgend von einer numerischen Steuerungseinheit abgerufen werden, sobald eine vorgegebene Bahnkurve mit der Werkzeugmaschine nachgefahren werden soll. Die Bahnplanungseinheit kann in die Werkzeugmaschine - insbesondere in eine numerische Steuerungseinheit derselben integriert oder unabhängig von dieser sein. Insbesondere kann ein herkömmlicher Computer als Bahnplanungseinheit verwendet werden, wenn dieser mit einem geeigneten Computerprogrammprodukt zur Durchführung des Verfahrens ausgestattet ist.

Die Erfindung ist weiterhin realisiert in einer Werkzeugmaschine der oben genannten Art, bei der die Steuerungseinheit zur Vorgabe eines Regelfaktors für das Zuführen der proportionalen Größe in Abhängigkeit von einem dem ersten Achsantrieb vorgegebenen Verstärkungsfaktor und einem dem zweiten Achsantrieb vorgegebenen Verstärkungsfaktor ausgebildet ist, wobei der dem zweiten Achsantrieb vorgegebene Verstärkungsfaktor einen effektiven Verstärkungsfaktor für die erste Antriebsanordnung und mindestens eine weitere, in einer zweiten Achsrichtung wirkende Antriebseinheit bildet.

Durch die Vorgabe eines effektiven Verstärkungsfaktors, der für alle Achsrichtungen gleich ist, wirken - wie oben dargestellt - die Antriebsanordnungen aller Achsrichtungen auf die gleiche Weise, unabhängig davon, wie viele Achsen die Antriebsanordnungen aufweisen. Hierdurch können Bahnverzerrungen weitgehend unterbunden werden.

Bei einer vorteilhaften Ausführungsform ist die Steuerungseinheit zum Vorgeben eines zweiten Sollwerts für den zweiten Achsantrieb ausgelegt und die Werkzeugmaschine weist bevorzugt eine Bahnplanungseinheit auf, die ausgelegt ist, eine Aufteilung eines gemeinsamen Sollwerts für die erste Antriebsanordnung in den ersten und den zweiten Sollwert in Abhängigkeit von den Eigenschaften der Achsantriebe und einer vorgegebenen Bahnkurve zur Bewegung eines durch die Antriebsanordnungen bewegten Werkzeugs und/oder Werkstücks vorzunehmen.

Die Bahnplanung legt somit fest, welche Bestandteile der Bewegung in einer Achsrichtung der erste bzw. zweite Achsantrieb auszuführen hat. Dies erfolgt abhängig von der Geometrie des zu bearbeitenden Werkstückes und abhängig von den bauartbedingten Begrenzungen der (aller) einzelnen interpolierenden Maschinenachsen. Begrenzungen bestehen bezüglich der Verfahrwege, Geschwindigkeiten, Beschleunigungen und Rucke sowie der Lageregelfaktoren; hierbei handelt es sich um Auslegungsfragen. Die Bewegungsbestandteile werden über die Lagesollwertvorgabe (Interpolation) an sämtliche Achsantriebe ausgegeben. Die Achsantriebe werden dann nach bekannten Lageinterpolations-Verfahren getrennt einzeln angesteuert.

Bei einer vorteilhaften Ausführungsform liegt der Betrag des effektiven Verstärkungsfaktors zwischen einem für den ersten Achsantrieb optimierten Verstärkungsfaktor und einem für den zweiten Achsantrieb optimierten Verstärkungsfaktor. Der effektive Verstärkungsfaktor wird von der Bahnplanungseinheit in Abhängigkeit vom Bewegungsvermögen der Achsantriebe zwischen diesen beiden Werten festgelegt.

Bei einer vorteilhaften Ausführungsform wird der Reglerfehler des ersten Achsantriebs dem zweiten Achsantrieb zugeführt und der Regelfaktor ist die Differenz aus dem effektiven Verstärkungsfaktor und dem dem ersten Achsantrieb vorgegebenen Verstärkungsfaktor. Hierdurch wird die oben angegebene Formel (\*\*) für den Verstärkungsfaktor $v_{i,b} = (Kv_e - Kv_{i,a}) \Delta x_{i,a} + Kv_e \Delta x_{i,b}$ regelungstechnisch realisiert.

Bei einer alternativen Ausführungsform wird der Regelfehler des ersten Achsantriebs dem Regler des zweiten Achsantriebs zugeführt, wobei zur Bildung des Regelfaktors die Differenz aus dem effektiven Verstärkungsfaktor und dem ersten Verstärkungsfaktor durch den effektiven Verstärkungsfaktor geteilt wird. Hierdurch wird die oben beschriebene Formel (\*\*\*) für den Verstärkungsfaktor des zweiten Achsantriebs $v_{i,b} = (Kv_e - Kv_{i,a}) / Kv_e \Delta x_{i,a} + \Delta x_{i,b}) Kv_e$ regelungstechnisch umgesetzt.

Bei einer bevorzugten Ausführungsform sind die Regler Lageregler zum Ermitteln der Geschwindigkeitssollwerte der Achsantriebe als Stellgrößen. Dies entspricht dem typischen Anwendungsfall. Zusätzlich oder alternativ zur Lageregelung kann auch eine Geschwindigkeitsregelung und/oder eine Drehzahlregelung auf die oben beschriebene Weise vorgenommen werden.

Weiterhin bevorzugt ist es, wenn der zweite Achsantrieb auf dem ersten Achsantrieb aufgebaut ist. Es kann die Bewegung in einer Achsrichtung durch die Überlagerung der Bewegungen einer langsamen Grundachse mit großem Verfahrweg und einer dynamischeren Zusatzachse mit üblicherweise geringerem Verfahrweg realisiert werden. Bei einer Werkzeugmaschine mit kartesischem Achsaufbau und jeweils zwei Achsantrieben (a,b) pro Achsrichtung (X,Y) können mit der Werkzeugmaschine beispielsweise für die X-und Y-Richtungen eine Folge kleiner Kreiskonturen, die nahe beieinander liegen, ausschließlich von den dynamischen Einzelachsen, etwa Xb und Yb ausgeführt werden. Oder, wenn die Folge kleiner Kreiskonturen nicht so nahe beieinander liegt, kann das Verfahren von Kreis zu Kreis vorwiegend von weniger dynamischen Grundachsen, Xa, Ya mit weitgehend konstanter, hoher Verfahrgeschwindigkeit bewerkstelligt werden, und die dynamischen Zusatzachsen Xb, Yb fahren die kleinen Kreiskonturen mit hohen Beschleunigungen ab. Im Gegensatz dazu steht das Beispiel der Bearbeitung einer großen Rechteckkontur, die vorteilhafter Weise so abgearbeitet wird, dass die Ecken für die weniger dynamischen Grundachsen (Xa,Ya) größer (d.h. entsprechend deren Möglichkeiten) verrundet werden, und die verbleibenden Eckenkonturen von den dynamischen Zusatzachsen (Xb,Yb) abgefahren werden. Die Aufteilung der Bahnbewegung in Abhängigkeit vom Teileprogramm wird hierbei, wie bereits oben erwähnt, von der Bahnplanungseinheit bewerkstelligt.

Bei einer bevorzugten Weiterbildung dieser Ausführungsform ist Lagerung des zweiten Achsantriebs an dem ersten Achsantrieb ganz oder teilweise impulsentkoppelt ausgeführt. Die Impulsentkopplung kann durch Massenausgleich oder geeignete z.B. gefederte Lagerung der Antriebe hergestellt werden.

Bei einer besonders bevorzugten Ausführungsform ist die Steuerungseinheit zum Erzeugen von Korrekturwerten aus der Masse und Beschleunigung des ersten Achsantriebs und/oder der Masse und Beschleunigung des zweiten Achsantriebs ausgelegt. Weiterhin weist die Werkzeugmaschine Mittel zum Zuführen der Korrekturwerte an einen Stromregler und/oder einen Drehzahlregler des ersten und/oder zweiten Achsantriebs auf. Wird keine mechanische Impulsentkopplung vorgenommen oder lassen sich mit dieser die gewünschten Toleranzen nicht erreichen, kann die Impulsentkopplung durch eine Steuerung mittels der Korrekturwerte durchgeführt werden.

Bei einer weiteren bevorzugten Ausführungsform weist die Werkzeugmaschine eine Bahnplanungseinheit auf, die ausgelegt ist, für die Bewegung eines durch die Antriebsanordnungen bewegten Werkzeugs und/oder Werkstücks entlang einer vorgegebenen Bahnkurve den effektiven Verstärkungsfaktor und/oder den ersten Verstärkungsfaktor des ersten Achsantriebs in Abhängigkeit von der Position entlang der Bahnkurve zu verändern. Der von der Bahnplanungseinheit an die numerische Steuerungseinheit weitergegebene Wertesatz dient in diesem Fall zur abschnittsweise optimierenden Anpassung von Regelkreisparametern der Achsantriebe. Dies ist insbesondere dann vorteilhaft, wenn für das Durchlaufen eines Teils der Bahnkurve eine Bewegung in einer Achsrichtung nicht notwendig ist, welche die oder eine besonders träge Antriebsanordnung aufweist. Der effektive Verstärkungsfaktor, welcher ansonsten durch die Trägheit dieser Antriebsanordnung limitiert wird, kann daher in diesem Teil der Bahnkurve erhöht werden.

Bei einer weiteren bevorzugten Ausführungsform weisen die langsamsten und/oder schnellsten Achsantriebe aller Achsrichtungen der Werkzeugmaschine einen gemeinsamen Verstärkungsfaktor auf und haben bevorzugt identischen Frequenzgang. Durch eine solche Abstimmung der Einzelachsen können besonders hohe Anforderungen bezüglich geringer verbleibender Bahnabweichungen erfüllt werden.

Bei einer besonders vorteilhaften Ausführungsform weist die Werkzeugmaschine mindestens einen Sensorregler auf, der eine Sollgröße des ersten und/oder des zweiten Achsantriebs mit einem Sensorregelsignal modifiziert. Die Wirksamkeit (Schärfe) des Sensoreingriffs ist über die Faktoren Kp, Tn, Tv des zumindest einen Sensorlagereglers vorgebbar, der allgemein als PID-Regler ausgeführt sein kann. Für praktische Zwecke kann es vorteilhaft sein, wenn man sich auf einen PI-Regler beschränkt. Entweder ist ein einziger Sensorregler vorgesehen, dessen Ausgangssignal die Sollwerte aller Achsantriebe in einer Achsrichtung modifiziert, oder es kann ein separater Sensorregler für jeweils einen oder eine Gruppe von Achsantrieben in einer Achsrichtung vorgesehen sein.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:

Fig. 1a,b    schematische Darsteftungen von Signalflussplänen zur Lageregelung von entlang von Achsrichtungen 1 bis n wirkenden Antriebsanordnungen einer Werkzeugmaschine;

Fig. 2    eine schematische Darstellung eines Signalflussplans zur Regelung von zwei Achsantrieben in einer Achsrichtung mit zwei Sensorlagereglem zur Modifikation von Sollwerten;

Fig. 3    eine schematische Darstellung eines Signalflussplans einer Antriebs- anordnung mit einem Achsantrieb in einer zweiten Achsrichtung,

Fig. 4    eine zu Fig. 3 analoge Darstellung einer Antriebsanordnung mit zwei Achsantrieben entlang einer ersten Achsrichtung, und

Fig. 5    eine schematische Darstellung einer Werkzeugmaschine mit einer Grundachse und einer Zusatzachse in einer ersten Achsrichtung und einer Einzelachse in einer zweiten Achsrichtung.

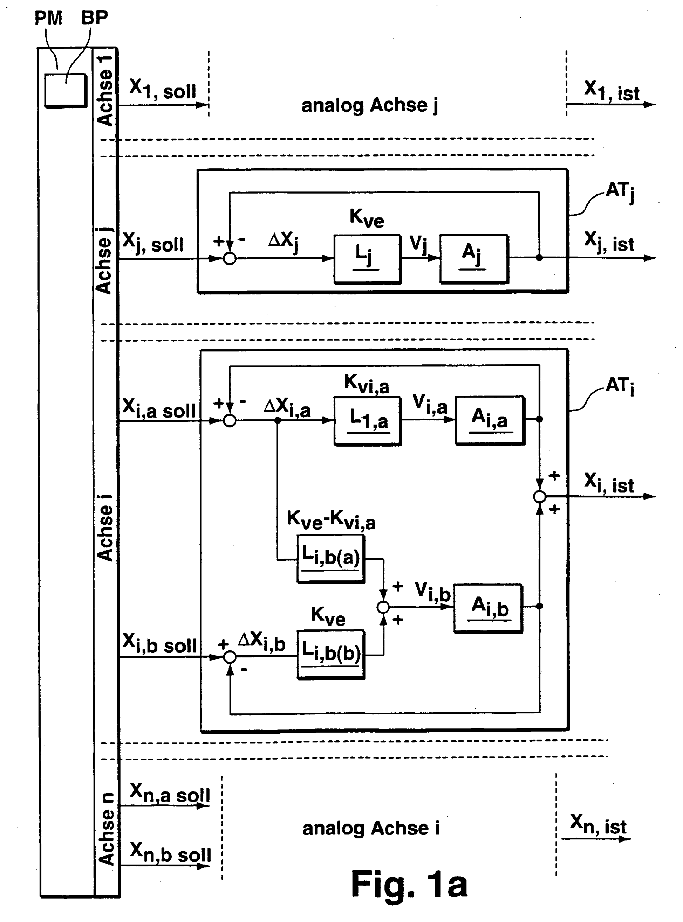

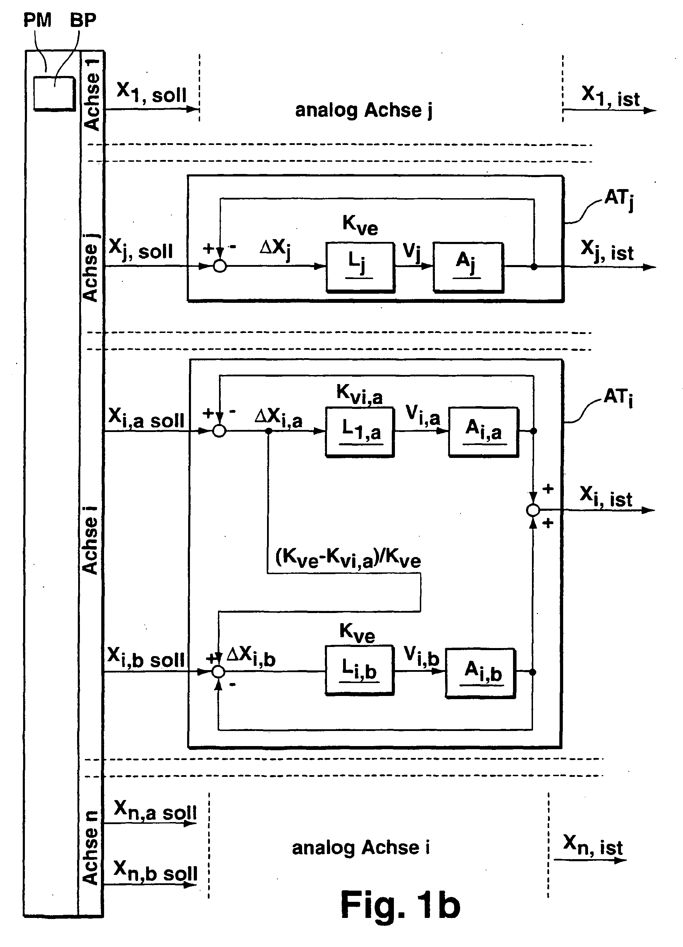

**Fig. 1a,b** zeigen jeweils einen Signalflussplan einer Lageregelung von Antriebsanordnungen $AT_1$ bis $AT_n$ einer Werkzeugmaschine, die für das Nachfahren einer Bahnkurve benötigt werden und entlang von Achsrichtungen 1, ... , n wirken. üblicherweise stimmt die zum Nachfahren einer Bahnkurve benötigte Anzahl von Antriebsanordnungen n mit der Gesamtzahl der an der Werkzeugmaschine vorhandenen Antriebsanordnungen überein. Eine erste Gruppe von Antriebsanordnungen $AT_i$ weisen jeweils einen einzigen Achsantrieb $A_j$ auf (vgl. Fig. 3), eine zweite Gruppe von Antriebsanordnungen $AT_i$, jeweils zwei Achsantriebe $A_{i,a}$, $A_{i,b}$ (vgl. Fig. 4) Es versteht sich, dass im Allgemeinen auch mehr als zwei Achsantriebe in einer Achsrichtung wirken können.

In einer allen Achsantrieben $AT_1$, ... $AT_n$ gemeinsamen, in einer numerischen Steuerungseinheit **PM** integrierten Bahnplanungseinheit **BP** zur Interpolation und ggf. Transformation der Bahnkurve wird festgelegt, welche Bestandteile der Bewegung eines Werkzeugs und/oder eines Werkstücks in einer Achsrichtung i, j deren Achsantrieb $A_i$ bzw. deren Achsantriebe $A_{i,a}$, $A_{i,b}$ jeweils auszuführen haben. Dies erfolgt abhangig von der Geometrie des zu bearbeitenden Werkstückes und abhängig von den bauartbedingten Begrenzungen der (aller) einzelnen interpolierenden Maschinenachsen, welche bezüglich der Verfahrweg, Geschwindigkeiten, Beschleunigungen und Rucke sowie der Lageregelfaktoren bestehen, und die der Bahnplanungseinheit BP bekannt sind.

Die in der Bahnplanungseinheit BP vorgegebenen Bewegungsbestandteile werden über die Lagesollwertvorgabe (Interpolation) an sämtliche Antriebsanordnungen $AT_1$ bis $AT_n$ ausgegeben. Hierbei wird Antriebsanordnungen $AT_j$ mit einem einzigen Achsantrieb $A_j$ ein einziger Sollwert $x_{j,soll}$ vorgegeben, bei Antriebsanordnungen $AT_i$ mit zwei Achsantrieben wird der Lagesollwert auf die einzelnen Achsantriebe $A_{i,a}$, $A_{i,b}$ aufgeteilt, d.h. einem ersten Achsantrieb $A_{i,a}$ wird ein erster Sollwert $x_{i,a\ soll}$ und einem zweiten Achsantrieb $A_{i,b}$ ein zweiter Sollwert $x_{i,b\ soll}$ zugeführt, wobei selbstverständlich gilt: $x_i$; = $x_{i,a,soll} + x_{i,b,soll}$. Die beispielsweise als Servoantriebe ausgebildeten Antriebe $A_{i,a}$, $A_{i,b}$, $A_j$ werden daher nach bekannten Verfahren getrennt einzeln angesteuert.

Um die Antriebsanordnungen $AT_1$ bis $AT_n$ der Achsrichtungen 1 bis n aufeinander abzustimmen, wird von der numerischen Steuerungseinheit PM ein effektiver Verstärkungsfaktor $Kv_e$ für alle Antriebsanordnungen $AT_1$ bis $AT_n$ festgelegt. Dieser wird bei Antriebsanordnungen $AT_j$ mit nur einem Achsantrieb $A_j$ dem zugeordneten Regler $L_j$ zur Lageregelung zugeführt. Bei Antriebsanordnungen $AT_i$ mit zwei Achsantrieben $A_{i,a}$, $A_{i,b}$ wird der effektive Verstärkungsfaktor $Kv_e$ dem Regler $L_a$ des zweiten Achsantriebs $A_{i,b}$ zugeführt, welcher im vorliegenden Fall auf dem ersten Achsantrieb $A_{i,a}$ aufgebaut und dynamischer als dieser ist. Hierbei liegt der Wert des effektiven Verstärkungsfaktors $Kv_e$ in Achsrichtung i vom Betrag her vorzugsweise zwischen den maximalen Verstärkungsfaktoren (Kv-Werten) $Kv_{i,a}$ bzw. $Kv_{i,b}$ der beiden Achsantriebe $A_{i,a}$ bzw. $A_{i,b}$ in dieser Achsrichtung (vgl. Fig. 4), welche nach den üblichen Optimierungskriterien bestimmt werden. Üblicherweise wird für diese (ggf. abschnittsweise veränderliche) einheitliche Festlegung des effektiven Verstärkungsfaktors $Kv_e$ die trägste der Antriebsanordnungen $AT_1$ bis $AT_n$ herangezogen, da diese für alle Achsrichtungen limitierend wirkt. Hierdurch können Bahnverzerrungen infolge von Unterschieden in den Schleppfehlern unterschiedlicher Achsrichtungen i, j wesentlich reduziert werden.

Damit die Antriebsanordnung $AT_i$ mit zwei Achsantrieben $A_{i,a}$, $A_{i,b}$ sich so verhält wie die Antriebsanordnung $AT_j$ mit einem Achsantrieb $A_j$, d.h. damit gilt:

$$\Delta x_{i,a}\, Kv_{i,a} + \Delta x_{i,b}\, Kv_{i,b} = (\Delta x_{i,a} + \Delta x_{i,b})\, Kv_e = \Delta x_i\, Kv_e = v_{i,a} + v_{i,b}\ (*),$$

wird dem zweiten Achsantrieb $A_{i,b}$ bzw. dem zugehörigen Regler eine zum Regelfehler $\Delta x_{i,a}$ des ersten Achsantriebs $A_{i,a}$ proportionale Größe zugeführt, wie in den in Fig. 1a und Fig. 1b gezeigten Signalflussplänen dargestellt. Unter Zuführen wird hierbei verstanden, dass die proportionale Größe eine Eingangsgröße für den Achsantrieb bzw. den Regler bildet, welche in der Regel zusammen mit anderen Eingangsgrößen an einem Summationspunkt zugeführt wird.

In Fig. 1a weist der zweite Regler zur Erzeugung der Stellgröße $v_{i,b}$ für den zweiten Achsantrieb $A_{i,b}$ einen ersten Regelabschnitt **$L_{i,b(b)}$** und einen zweiten, parallelen Regelabschnitt **$L_{i,b(b)}$** auf, wobei ein Eingangssignal des ersten Regelabschnitts $L_{i,b(b)}$ ein Regelfehler $Ax_{i,b}$ des zweiten Achsantriebs $A_{i,b}$ und ein Eingangssignal des zweiten Regelabschnitts $L_{i,b(a)}$ ein Regelfehler $\Delta x_{i,a}$ des ersten Achsantriebs $A_{i,a}$ ist. Die numerische Steuerungseinheit PM gibt für den zweiten Regelabschnitt $L_{i,b(a)}$, welcher als Zuführungsmittel zum Zuführen der proportionalen Größe an den zweiten Achsantrieb $A_{i,b}$ dient, einen Regelfaktor vor, der aus der Differenz des effektiven Verstärkungsfaktors $Kv_e$ und des Verstärkungsfaktors $Kv_{i,a}$ des ersten Achsantriebs $A_{i,b}$ gebildet ist, d.h. $Kv_e - Kv_{i,a}$. Aus den vom ersten und zweiten Regelabschnitt $L_{i,b(a)}$ und $L_{i,b(b)}$ erzeugten Ausgangssignalen wird durch Addition die Stellgröße $v_{i,b}$ für den zweiten Achsantrieb $A_{i,b}$ gebildet, d.h. es gilt: $v_{i,b} = (Kv_e - Kv_{i,a})\, \Delta x_{i,a} + Kv_e\, \Delta X_{i,b}$ (**). Da für die erste Stellgröße $v_{i,a} = Kv_{i,a}\, \Delta x_{i,a}$ gilt, ist die oben angegebene Gleichung (*) erfüllt und die Antriebsanordnung $AT_i$ mit den zwei Achsantrieben $A_{i,a}$ und $A_{i,b}$ verhält sich wie die Antriebsanordnung $AT_j$ mit nur einem Achsantrieb $A_j$ und effektivem Verstärkungsfaktor $Kv_e$.

Eine alternative regelungstechnische Umsetzung ist in Fig. 1b gezeigt. Hier wird ein nicht in zwei Regelabschnitte aufgeteilter Regler $L_{i,b}$ verwendet, dem über eine als Zuführungsmittel dienende Verbindung ein Regelfaktor vorgegeben wird, der in diesem Fall gebildet ist durch die die Differenz aus dem effektiven Verstärkungsfaktor ($Kv_e$) und

dem ersten Verstärkungsfaktor ($Kv_{i,a}$), welche durch den effektiven Verstärkungsfaktor ($Kv_e$) geteilt wird, d.h. der Regelfaktor ist ($Kv_e$ - $Kv_{i,a}$)/ $Kv_e$, so dass die Sollgröße $v_{i,b}$ auf folgende Weise festgelegt ist: $v_{i,b}$ = ($Kv_e$ - $Kv_{i,a}$) / ($Kv_e$ $\Delta x_{i,a}$ + $\Delta x_{i,b}$) $Kv_e$ (***), welche durch algebraische Umformung aus Gleichung (**) erhalten wird und somit ebenfalls zum gewünschten Verhalten der Antriebsanordnung $AT_i$ führt.

Die Steuerungseinheit PM kann die Verstärkungsfaktoren während der gesamten Abarbeitung eines NC-Programms zum Nachfahren einer Bahnkurve konstant halten. Dies gilt insbesondere für den Verstärkungsfaktor $Kv_{i,a}$ des ersten Achsantriebs $A_{i,a}$, wenn dieser eine weniger dynamische Grundachse ist.

Wie oben ausgeführt, wirkt die langsamste der Antriebsanordnungen $AT_1$ bis $AT_n$ für alle Achsrichtungen 1 bis n der Werkzeugmaschine limitierend. Bei der Bewegung eines durch die Antriebsanordnungen $AT_1$ bis $AT_n$ bewegten Werkzeugs und/oder Werkstücks entlang einer Bahnkurve ist es daher vorteilhaft, den effektiven Verstärkungsfaktor $Kv_e$ in Abhängigkeit von der Position entlang der Bahnkurve zu verändern. Eine Erhöhung des Verstärkungsfaktors $Kv_e$ erfolgt dabei vorzugsweise in Bahnabschnitten, bei der eine (oder mehrere) Achsrichtungen unbeteiligt ist/sind, so dass sich hierdurch keine Bahnverzerrungen ergeben. Selbstverständlich können auch die Verstärkungsfaktoren $Kv_{i,a}$ der ersten Achsantriebe $A_{i,a}$ in Abhängigkeit von der Position entlang der Bahnkurve verändert werden. Indem hierdurch temporär Stabilitätsreserven des Lageregelkreises weniger dynamischer Antriebsanordnungen ausgenutzt werden, lässt sich der Verstärkungsfaktoren $Kv_e$ ohne negative Effekte erhöhen, wodurch das maximale Bewegungsvermögen der einzelnen Achsantriebe optimal ausgenutzt werden kann. Die Vorgabe der dynamischen Verstärkungsfaktoren wird hierbei in der Bahnplanungseinheit BP bewerkstelligt.

Es ist alternativ auch möglich, bei der oben beschriebenen Regelung keine eigene Sollbahn für z.B. den zweiten Achsantrieb $A_{i,b}$ zu interpolieren, sondern die Sollposition $x_{i,b\ soll}$ konstant auf Null zu halten. In diesem Falle fungiert der als Zusatzachse geschaltete Achsantrieb $A_{i,b}$ als eine Vorlaufachse rein zur Reduktion des Schleppabstandes, um den effektiven Verstärkungsfaktor $Kv_e$ zu erreichen. Es versteht sich, dass das oben beschriebene Vorgehen für eine, mehrere oder sämtliche Achsrichtungen 1 bis n der Werkzeugmaschine erfolgen kann, bei denen die Bewegung auf zwei Achsantriebe aufgeteilt wird.

Für besonders hohe Anforderungen bezüglich geringer verbleibender Bahnabweichungen können auch die Achsantriebe $A_{i,a}$, $A_{i,b}$, $A_j$ aller Achsrichtungen 1 bis n einzeln aufeinander abgestimmt werden. Hierzu werden die langsamsten bzw. trägsten Achsantriebe, im vorliegenden Fall also die ersten Achsantriebe $A_{i,a}$, $A_{j,a}$, sowie die schnellsten Achsantriebe, d.h. die zweiten Achsantriebe $A_{i,b}$, $A_{j,b}$ aller Achsrichtungen 1 bis n jeweils für sich mit identischen Frequenzgang ausgestattet und weisen denselben Verstärkungsfaktor $Kv_a$ = $Kv_{i,a}$ = $Kv_{j,a}$ = ... bzw. $Kv_b$ = $Kv_{i,b}$ = $Kv_{j,b}$ = ... auf.

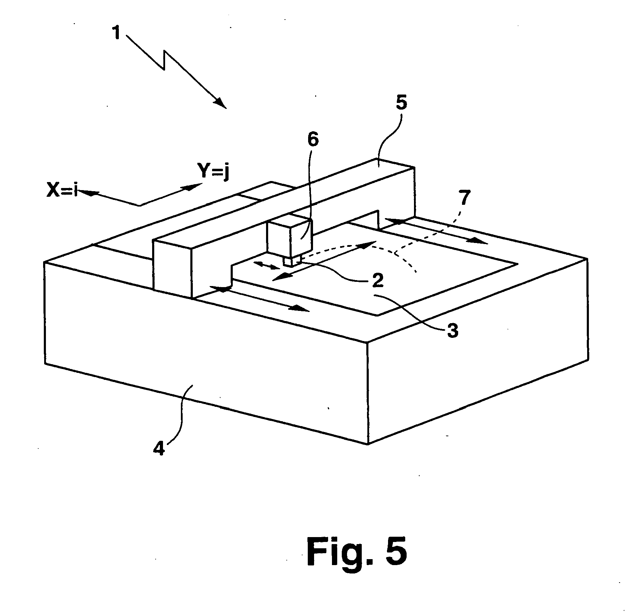

Das oben beschriebene Vorgehen kann insbesondere zur Regelung von Antriebsanordnungen einer Werkzeugmaschine **1** eingesetzt werden, wie sie schematisch in **Fig. 5** gezeigt ist. Ein Werkstück **3** ist dort zur Bearbeitung durch ein Werkzeug 2 ortsfest auf einem Tisch **4** angeordnet. Das Werkzeug 2 ist in X-Richtung beweglich an einer Halteeinrichtung **6** angebracht. Die Halteeinrichtung 6 ist wiederum in Y-Richtung beweglich an einem Portal 5 angeordnet, welches selbst in X-Richtung beweglich ist. Die Halteeinrichtung 6 weist eine geringere Masse auf als das Portal 5 bzw. das Werkzeug 2. Demzufolge können Bewegungen in X-Richtung schneller durch Relativbewegung des Werkzeugs 2 zur Halteeinrichtung 6 als durch Bewegung des Portals 5 vorgenommen werden. Das Portal 5 und das Werkzeug 2 werden durch eine Antriebsanordnung $AT_i$ wie in Fig. 1 für Achsrichtung i dargestellt (entsprechend der X-Richtung in Fig. 5) angetrieben. Der erste Achsantrieb $A_{i,a}$ dient zur Bewegung des Portals 5 auf dem Tisch 4, der zweite Achsantrieb $A_{i,b}$ dient der Bewegung des Werkzeugs 2 entlang der Halteeinrichtung 6. Die Bewegung der Halteeinrichtung 6 in Y-Richtung (entsprechend Achsrichtung j in Fig. 1) erfolgt entsprechend mit einem Achsantrieb $A_j$ einer Antriebsanordnung $AT_j$ mit nur einem Achsantrieb $A_j$, wie in Fig. 1 gezeigt. Mit den Antriebsanordnungen $AT_i$, $AT_j$ wird somit eine in der Bahnplanungseinheit BP geplante Bahnkurve 7 möglichst präzise und schnell nachgefahren.

Bei den obigen Betrachtungen wurde keine Rücksicht darauf genommen, ob die beiden Achsantriebe $A_{i,a}$, $A_{i,b}$ unabhängig voneinander aufgebaut sind, was z.B. dann der Fall ist, wenn sich Werkzeug und Werkstück entlang der Achsrichtung i bewegen sollen. In Fig. 5 wird das Werkzeug 2 vom Portal 5 mitbewegt, sodass der zugehörige zweite Achsantrieb $A_{i,b}$ auf dem ersten Achsantrieb $A_{i,a}$ aufgebaut ist, also dessen Bewegung mit ausführt. Bei dem in Fig. 5 gezeigten Aufbau einer Werkzeugmaschine 1 wird die Beweglichkeit des Werkzeugs 2 relativ zur Halteeinrichtung 6 bzw. zum Portal 5 als Zusatzachse mit hoher Dynamik und geringem Verfahrbereich genutzt, wobei diese auf dem Portal 5 als Grundachse mit großen Verfahrbereich und geringerer Dynamik aufgebaut ist und von diesen mitbewegt ist.

Für Achsen, welche aufeinander aufgebaut sind, d.h. für Achsen, deren Bewegung nicht entkoppelt ist, muss ggf. bei der Auslegung der Antriebsanordnung $AT_i$ die Rückwirkung des einen Achsantriebs $A_{i,a}$ auf den anderen Achsantrieb $A_{i,b}$ berücksichtigt werden. Hierzu kann ein Masseausgleich durchgeführt werden, d.h. das Portal 5 in Fig. 5 kann eine (nicht gezeigte) Masse aufweisen, die bei einer ruckartigen Bewegung des Werkzeugs 2 in X-Richtung zur Kompensation eine entsprechende Gegenbewegung ausführt. Alternativ oder zusätzlich kann zur Herstellung eines Impulsausgleichs das Portal 5 an dem Tisch 4 elastisch federnd oder dämpfend gelagert werden.

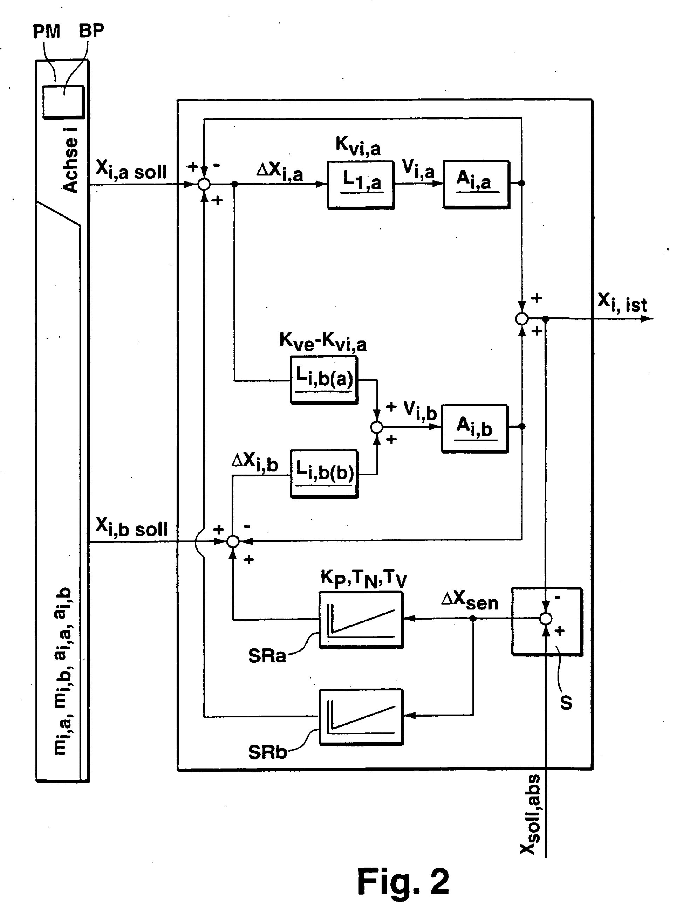

Ist ein solcher Impulsausgleich nicht vorgesehen bzw. wird nur teilweise durchgeführt, ist es möglich, wie in **Fig. 2** für eine Antriebsanordnung $AT_i$ in Achsrichtung i gezeigt, in der Bahnplanungseinheit BP die durch die Interpolation der Bahnkurve bekannten Beschleunigungen $\mathbf{a}_{i,a}$ und $\mathbf{a}_{i,b}$ sowie die Massen $\mathbf{m}_{i,a}$, $\mathbf{m}_{i,b}$ der Achsen (a und b) dazu zu verwenden, um Korrekturwerte zu erzeugen, die in Fig. 2 nicht bildlich dargestellten Stromreglern und ggf. auch Drehzahlreglern der Achsantriebe $A_{i,a}$ und $A_{i,b}$ vorsteuernd wechselseitig aufgeschaltet werden.

Unabhängig davon, ob die Achsen der Werkzeugmaschine aufeinander aufgebaut sind oder nicht, ist es möglich, eine Sensorregelung der Antriebsanordnungen vorzunehmen. Fig. 2 zeigt hierzu einen Sensor **S**, welcher Abweichungen $\Delta x_{sen}$ der Position $x_{i,ist}$ entlang der auszuführenden Bahnkurve, der die programmierte Nennbahn zu Grunde liegt (also auch verbleibende Abweichungen der Achsen), von einer Sollbahn $x_{soll,abs}$, etwa einer mit Oberflächenabweichungen versehenen Werkstückkontur, ermittelt. Ein beliebiger "Off-Set"-Wert ist in dem momentanen Wert $x_{soll,abs}$ der Sollbahn bereits beinhaltet; entsprechend etwa dem Nennabstand Düse-Blech bei der Abstandsregelung einer Laserbearbeitungsmaschine. Die Abweichung $\Delta x_{sen}$ wird zwei Sensorlagereglern **SR$_a$**, **SR$_b$** zugeführt, die jeweils einem der Achsantriebe $A_{i,a}$, $A_{i,b}$ zugeordnet sind und ein Sensorregelsignal erzeugen, das einem jeweiligen Sollwertsignal $x_{i,a\,soll}$ und $x_{i,b\,soll}$ aufaddiert wird. Die Wirksamkeit (Schärfe) des Sensoreingriffs ist über die Faktoren **Kp**, **Tn**, **Tv** der Sensorlageregler SR$_a$, SR$_b$ vorgebbar, die in Fig. 2 als PID-Regler gezeigt sind. Es versteht sich, dass auch ein einziger Sensorregler verwendet werden kann, der ein Sensorsignal nur für einen Achsantrieb $A_{i,a}$ bzw. $A_{i,b}$ oder für beide Achsantriebe $A_{i,a}$, $A_{i,b}$ gemeinsam erzeugt.

Bei dem Sensor S muss es sich nicht um einen in Achsrichtung i ausgerichteten bzw. wirksamen Sensor handeln, d.h. bei der durch den Sensor S bestimmten Lageabweichung $X_{soll,abs}$ kann es sich auch um einen verteilten, transformierten Bestandteil eines Sensorsignals handeln, und zwar für den Fall, dass das Signal mehrere Achsrichtungen i beeinflusst, der Sensor S also nicht fix auf eine Achsrichtung ausgerichtet ist (z.B. in einer 3-D-Bearbeitung). Zur Vermeidung weiterer Bahnverzerrungen durch die Sensorlageregelung sind für alle Achsrichtungen 1 bis n identische Verstärkungsfaktoren der jeweils einem Achsantrieb zugeordneten Sensorregler SR$_a$, SR$_b$ anzuwenden, bzw. bei nur einem Sensorregler gleich dessen Lagevorhalt zu transformieren. In vergleichbarer Art und Weise kann etwa das Signal eines Kraftsensors, beispielsweise für die Andruckkraftregelung beim Schleifen, vorsteuernd aufgeschaltet werden beispielsweise auf den (die) Stromregler der Achsantriebe $A_{i,a}$, $A_{i,b}$. Es sei noch angemerkt, dass Sensorsignale starke Rauschbestandteile aufweisen können, die durch eine Tiefpassfilterung geglättet werden müssen, damit die Anregung der einzelnen Achsantriebe nicht zu hochfrequent erfolgt. Die Berücksichtigung dieser Tatsache ist dem Fachmann aber geläufig.

Insgesamt kann durch die oben beschriebene Koordination von Antriebsanordnungen von Werkzeugmaschinen mit gekoppelten Achsen und eine hiermit geregelte Werkzeugmaschine eine präzisere und schnellere Werkzeugbearbeitung erfolgen, als dies mit bisherigen Verfahren bzw. Werkzeugmaschinen möglich war. Es versteht sich, dass das oben im Zusammenhang mit zwei Achsantrieben entlang einer Achsrichtung beschriebene Verfahren in für den Fachmann offensichtlicher Weise auch auf Antriebsanordnungen mit mehr als zwei Achsantrieben verallgemeinern lässt. Weiterhin kann die Bahnplanungseinheit auch unabhängig von der Werkzeugmaschine betrieben werden und die von dieser berechneten Parameter (Sollwerte, Verstärkungsfaktoren etc.) zunächst abgespeichert und erst bei der Abarbeitung des Bahnprogramms als Vorgabewerte an die numerische Steuerung übermittelt werden.

Obgleich die Koordination von Antriebsanordnungen in den obigen Ausführungen im Zusammenhang mit kaskadierten Regelkreisen der einzelnen Servoachsen (a, b), d.h. mit unterlagerten Geschwindigkeits- und Stromregelungen, beschrieben ist, sollen auch andere Regelverfahren einbezogen sein, beispielsweise können alternativ auch Geschwindigkeits- und Stromsollwerte in der numerischen Steuerungseinheit generiert und (teilweise) direkt vorgegeben werden. Hier wird der Lageregler umgangen, wirkt nur noch für die Abweichungen und wird mit Vorsteuerung bezeichnet. Mit diesen anderen Achsregelverfahren soll erreicht werden, den tatsächlich wirksamen Kv-Faktor (Kv = v / $\Delta$s) der Einzelachsen (a, b) gegenüber dem bei kaskadierter Regelung zu erhöhen. Für das oben beschriebene Verfahren werden in diesem Fall die tatsächlich wirksamen Kv-Faktoren der Einzelachsen herangezogen.

**Patentansprüche**

1. Verfahren zum Koordinieren von in unterschiedlichen Achsrichtungen (i, j) wirkenden Antriebsanordnungen (AT$_i$, AT$_j$) einer Werkzeugmaschine (1), umfassend die Schritte:

Vorgeben eines ersten Sollwerts ($x_{i,a\,soll}$) für einen ersten geregelten Achsantrieb ($A_{i,a}$) einer in einer ersten Achsrichtung (i) wirkenden, ersten Antriebsanordnung (AT$_i$),
Vorgeben eines Regelfaktors für das Zuführen einer zu einem Regelfehler ($\Delta x_{i,\,a}$) des ersten geregelten Achsantriebs ($A_{i,a}$) proportionalen Größe an wenigstens einen zweiten geregelten Achsantrieb ($A_{i,b}$) der ersten Antriebsanordnung (AT$_i$),
**gekennzeichnet durch**
Vorgeben des Regelfaktors in Abhängigkeit von einem dem ersten Achsantrieb ($A_{i,a}$) vorgegebenen Verstärkungsfaktor ($Kv_{i,a}$) und einem dem zweiten Achsantrieb ($A_{i,b}$) vorgegebenen Verstärkungsfaktor ($Kv_e$), wobei

der dem zweiten Achsantrieb ($A_{i,b}$) vorgegebene Verstärkungsfaktor ($KV_e$) einen effektiven Verstärkungsfaktor ($Kv_e$) für die erste Antriebsanordnung ($AT_i$) und mindestens eine weitere, in einer zweiten Achsrichtung (j) wirkende Antriebsanordnung ($AT_j$) bildet.

2. Verfahren nach Anspruch 1, **gekennzeichnet durch** Vorgeben eines zweiten Sollwerts ($x_{i,b\,soll}$) für den zweiten Achsantrieb ($A_{i,b}$), wobei eine Aufteilung eines gemeinsamen Sollwerts ($x_{i,soll}$) für die erste Antriebsanordnung ($AT_i$) in den ersten und zweiten Sollwert ($x_{i,a\,soll}$, $x_{i,b\,soll}$) in Abhängigkeit von den Eigenschaften der Achsantriebe ($A_{i,a}$, $A_{i,b}$) und einer vorgegebenen Bahnkurve (7) zur Bewegung eines **durch** die Antriebsanordnungen ($AT_i$, $AT_j$) bewegten Werkzeugs (2) und/oder Werkstücks (3) erfolgt.

3. Verfahren nach Anspruch 1 oder 2, **dadurch gekennzeichnet, dass** der Betrag des effektiven Verstärkungsfaktors ($Kv_e$) zwischen einem für den ersten Achsantrieb ($A_{i,a}$) optimierten Verstärkungsfaktor ($Kv_{i,a}$) und einem für den zweiten Achsantrieb ($A_{i,b}$) optimierten Verstärkungsfaktor ($Kv_{i,b}$) vorgegeben wird.

4. Verfahren nach einem der vorhergehenden Ansprüche, **dadurch gekennzeichnet, dass** die Position ($x_{i,ist}$) der Achsantriebe ($A_{i,a}$, $A_{i,b}$) geregelt wird, wobei als Stellgrößen die Geschwindigkeiten ($v_{i,a}$, $v_{i,b}$) der Achsantriebe ($A_{i,a}$, $A_{i,b}$) eingestellt werden.

5. Verfahren nach einem der vorhergehenden Ansprüche, **dadurch gekennzeichnet, dass** der zweite Achsantrieb ($A_{i,b}$) auf dem ersten Achsantrieb ($A_{i,a}$) aufgebaut ist und mit diesem mitbewegt wird.

6. Verfahren nach Anspruch 5, **dadurch gekennzeichnet, dass** der erste Achsantrieb ($A_{i,a}$) von dem zweiten Achsantrieb ($A_{i,b}$) ganz oder teilweise impulsentkoppelt wird.

7. Verfahren nach Anspruch 5 oder 6, **dadurch gekennzeichnet, dass** aus der Masse ($m_{i,a}$) und Beschleunigung ($a_{i,a}$) des ersten Achsantriebs ($A_{i,a}$) und/oder der Masse ($m_{i,b}$) und Beschleunigung ($a_{i,b}$) des zweiten Achsantriebs ($A_{i,b}$) Korrekturwerte für das Zuführen an einen Stromregler und/oder einen Drehzahlregler des ersten und/oder des zweiten Achsantriebs ($A_{i,a}$, $A_{i,b}$) bestimmt werden.

8. Verfahren nach einem der vorhergehenden Ansprüche, **dadurch gekennzeichnet, dass** für die Bewegung eines durch die Antriebsanordnungen ($AT_i$, $AT_j$) bewegten Werkzeugs (2) und/oder Werkstücks (3) entlang einer vorgegebenen Bahnkurve (7) der effektive Verstärkungsfaktor ($Kv_e$) und/oder der dem ersten Achsantrieb ($A_{i,a}$) vorgegebene Verstärkungsfaktor ($Kv_{i,a}$) in Abhängigkeit von der Position entlang der Bahnkurve (7) verändert wird.

9. Verfahren nach Anspruch 8, **dadurch gekennzeichnet, dass** der effektive Verstärkungsfaktor ($Kv_e$) in Bahnabschnitten erhöht wird, in denen zumindest in einer Achsrichtung keine Bewegung erfolgt.

10. Verfahren nach einem der vorhergehenden Ansprüche, **dadurch gekennzeichnet, dass** eine Stellgröße $v_{i,a}$ des ersten Achsantriebs ($A_{i,a}$) in der ersten Achsrichtung (i) ermittelt wird als:

$$v_{i,a} = Kv_{i,a}\,\Delta x_{I,a,}$$

und eine Stellgröße $v_{i,b}$ des zweiten Achsantriebs ($A_{i,b}$) als

$$v_{i,b} = (Kv_e - Kv_{i,a})\,\Delta x_{i,a} + Kv_e\,\Delta x_{i,b,}$$

wobei $\Delta x_{i,a}$, $\Delta x_{i,b}$ die Regelfehler des ersten und zweiten Achsantriebs ($A_{i,a}$, $A_{i,b}$) bezüglich der Sollwerte $x_{i,a\,soll}$, $x_{i,b\,soll}$ bezeichnen, $Kv_{i,a}$ der Verstärkungsfaktor des ersten Achsantriebs ($A_{i,a}$) der ersten Antriebsanordnung ($AT_i$) in der ersten Achsrichtung ist, und $Kv_e$ den effektiven Verstärkungsfaktor bezeichnet.

11. Verfahren nach einem der vorhergehenden Ansprüche, **dadurch gekennzeichnet, dass** die langsamsten und/oder die schnellsten Achsantriebe ($A_{i,a}$, $A_{j,a}$) der Antriebsanordnungen ($AT_i$, $AT_j$) aller Achsrichtungen (i, j) der Werkzeugmaschine (1) denselben Verstärkungsfaktor ($Kv_a$) aufweisen und bevorzugt identischen Frequenzgang haben.

**12.** Verfahren nach einem der vorhergehenden Ansprüche, **dadurch gekennzeichnet, dass** ein Sollwert ($x_{i,a\ soll}$, $x_{i,b\ soll}$) des ersten und/oder des zweiten Achsantriebs ($A_{i,a}$, $A_{i,b}$) zumindest der ersten Antriebsanordnung ($AT_i$) mit einem Sensorregelsignal ($SR_a$, $SR_b$) modifiziert wird.

**13.** Bahnplanungseinheit (BP), umfassend ein Computerprogrammprodukt, welches zur Durchführung aller Schritte des Verfahrens nach einem der Ansprüche 1 bis 12 ausgebildet ist, wenn das Programm auf der Bahnplanungseinheit (BP) abläuft.

**14.** Werkzeugmaschine mit:

einer in einer ersten Achsrichtung (i) wirkenden Antriebsanordnung ($AT_i$), die einen ersten Achsantrieb ($A_{i,a}$) mit einem zugeordneten Regler ($L_{i,a}$) aufweist, einer Steuerungseinheit (PM) zur Vorgabe eines Sollwerts ($x_{i,a\ soll}$) an den Regler ($L_{i,a}$) des ersten Achsantriebs ($A_{i,a}$), sowie Mitteln ($L_{i,b(a)}$) zum Zuführen einer zu einem Regelfehler ($\Delta x_{i,a}$) des ersten Achsantriebs ($A_{i,a}$) proportionalen Größe an wenigstens einen zweiten Achsantrieb ($A_{i,b}$) der ersten Antriebsanordnung ($AT_i$) oder einen dem zweiten Achsantrieb ($A_{i,b}$) zugeordneten Regler ($L_{i,b}$), **dadurch gekennzeichnet, dass**
die Steuerungseinheit (PM) zur Vorgabe eines Regelfaktors für das Zuführen der proportionalen Größe in Abhängigkeit von einem dem ersten Achsantrieb ($A_{i,a}$) vorgegebenen Verstärkungsfaktor ($Kv_{i,a}$) und einem dem zweiten Achsantrieb ($A_{i,b}$) vorgegebenen Verstärkungsfaktor ($Kv_e$) ausgebildet ist, wobei der dem zweiten Achsantrieb ($A_{i,b}$) vorgegebene Verstärkungsfaktor ($KV_e$) einen effektiven Verstärkungsfaktor ($Kv_e$) für die erste Antriebsanordnung ($AT_i$) und mindestens eine weitere, in einer zweiten Achsrichtung (j) wirkende Antriebseinheit ($AT_j$) bildet.

**15.** Werkzeugmaschine nach Anspruch 14, **dadurch gekennzeichnet, dass** die Steuerungseinheit (PM) zum Vorgeben eines zweiten Sollwerts ($x_{i,b\ soll}$) an den zweiten Achsantrieb ($A_{j,b}$) ausgelegt ist, wobei die Werkzeugmaschine bevorzugt eine Bahnplanungseinheit (BP) aufweist, die ausgelegt ist, eine Aufteilung eines gemeinsamen Sollwerts ($x_{i,soll}$) für die erste Antriebsanordnung ($AT_i$) in den ersten und zweiten Sollwert ($x_{i,a\ soll}$, $x_{i,b\ soll}$) in Abhängigkeit von den Eigenschaften der Achsantriebe ($A_{i,a}$, $A_{i,b}$) und einer vorgegebenen Bahnkurve (7) zur Bewegung eines durch die Antriebsanordnungen ($AT_i$, $AT_j$) bewegten Werkzeugs (2) und/oder Werkstücks (3) vorzunehmen.

**16.** Werkzeugmaschine nach Anspruch 14 oder 15, **dadurch gekennzeichnet, dass** der Betrag des effektiven Verstärkungsfaktors ($Kv_e$) zwischen einem für den ersten Achsantrieb ($A_{i,a}$) optimierten Verstärkungsfaktor ($Kv_{i,a}$) und einem für den zweiten Achsantrieb ($A_{i,b}$) optimierten Verstärkungsfaktor ($Kv_{i,b}$) liegt.

**17.** Werkzeugmaschine nach einem der Ansprüche 14 bis 16, **dadurch gekennzeichnet, dass** der Reglerfehler ($\Delta x_{i,a}$) des ersten Achsantriebs ($A_{i,a}$) dem zweiten Achsantrieb ($A_{i,b}$) zugeführt wird, und dass der Regelfaktor ($Kv_e - Kv_{i,a}$) die Differenz aus dem effektiven Verstärkungsfaktor ($Kv_e$) und dem dem ersten Achsantrieb ($A_{i,a}$) vorgegebenen Verstärkungsfaktor ($Kv_{i,a}$) ist.

**18.** Werkzeugmaschine nach einem der Ansprüche 14 bis 16, **dadurch gekennzeichnet, dass** der Regelfehler ($\Delta x_{i,a}$) des ersten Achsantriebs ($A_{i,a}$) dem Regler ($L_{i,b}$) des zweiten Achsantriebs ($A_{i,b}$) zugeführt wird, und dass zur Bildung des Regelfaktors (($Kv_e - Kv_{i,a}$)/ $Kv_e$) die Differenz aus dem effektiven Verstärkungsfaktor ($Kv_e$) und dem ersten Verstärkungsfaktor ($Kv_{i,a}$) durch den effektiven Verstärkungsfaktor ($Kv_e$) geteilt wird.

**19.** Werkzeugmaschine nach einem der Ansprüche 14 bis 18, **dadurch gekennzeichnet, dass** die Regler ($L_{i,a}$, $L_{i,b}$) Lageregler zum Ermitteln der Geschwindigkeitssollwerte der Achsantriebe ($A_{i,a}$, $A_{i,b}$) als Stellgrößen ($v_{i,a}$, $v_{i,b}$) sind.

**20.** Werkzeugmaschine nach einem der Ansprüche 14 bis 19, **dadurch gekennzeichnet, dass** der zweite Achsantrieb ($A_{i,b}$) auf dem ersten Achsantrieb ($A_{i,a}$) aufgebaut ist.

**21.** Werkzeugmaschine nach Anspruch 20, **dadurch gekennzeichnet, dass** die Lagerung des zweiten Achsantriebs ($A_{i,a}$) an dem ersten Achsantrieb ($A_{i,b}$) ganz oder teilweise impulsentkoppelt ausgeführt ist.

**22.** Werkzeugmaschine nach Anspruch 20 oder 21, **dadurch gekennzeichnet, dass** die Steuerungseinheit (PM) zum Erzeugen von Korrekturwerten aus der Masse ($m_{i,a}$) und Beschleunigung ($a_{i,a}$) des ersten Achsantriebs ($A_{i,a}$) und/oder der Masse ($m_{i,b}$) und Beschleunigung ($a_{i,b}$) des zweiten Achsantriebs ($A_{i,b}$) ausgelegt ist sowie Mittel zum Zuführen der Korrekturwerte an einen Stromregler und/oder einen Drehzahlregler des ersten und/oder zweiten Achsantriebs ($A_{i,a}$, $A_{i,b}$) vorgesehen sind.

**23.** Werkzeugmaschine nach einem der Ansprüche 14 oder 16 bis 22, **gekennzeichnet durch** eine Bahnplanungseinheit (PM), die ausgelegt ist, für die Bewegung eines **durch** die Antriebsanordnungen ($AT_i$, $AT_j$) bewegten Werkzeugs (2) und/oder Werkstücks (3) entlang einer vorgegebenen Bahnkurve den effektiven Verstärkungsfaktor (Kve) und/oder den ersten Verstärkungsfaktor ($Kv_{i,a}$) des ersten Achsantriebs ($A_{i,a}$) in Abhängigkeit von der Position entlang der Bahnkurve (7) zu verändern.

**24.** Werkzeugmaschine nach einem der Ansprüche 14 bis 23, **dadurch gekennzeichnet, dass** die langsamsten und/oder schnellsten Achsantriebe ($A_{i,a}$, $A_{j,a}$) aller Achsrichtungen (i, j) der Werkzeugmaschine (1) einen gemeinsamen Verstärkungsfaktor ($Kv_a$) aufweisen und bevorzugt identischen Frequenzgang haben.

**25.** Werkzeugmaschine nach einem der Ansprüche 14 bis 24, **gekennzeichnet durch** mindestens einen Sensorregler ($SR_a$, $SR_b$), der eine Sollgröße ($x_{i,a\,soll}$, $x_{i,b\,soll}$) des ersten und/oder des zweiten Achsantriebs ($A_{i,a}$, $A_{i,b}$) mit einem Sensorregelsignal modifiziert.

**Claims**

**1.** Method for coordinating drive arrangements ($AT_i$, $AT_j$) of a machine tool (1) which act in different axial directions (i, j), comprising the steps of:

predetermining a first desired value ($x_{i,a\,soll}$) for a first controlled axial drive ($A_{i,a}$) of a first drive arrangement ($AT_i$) which operates in a first axial direction (i), predetermining a control factor for supplying a variable which is proportional to a control error ($\Delta x_{i,a}$) of the first controlled axial drive ($A_{i,a}$) to at least a second controlled axial drive ($A_{i,b}$) of the first drive arrangement ($AT_i$),
**characterised by**
predetermining the control factor in accordance with an amplification factor ($Kv_{i,a}$) which is predetermined for the first axial drive ($A_{i,a}$) and an amplification factor ($Kv_e$) which is predetermined for the second axial drive ($A_{i,b}$), the amplification factor ($Kv_e$) which is predetermined for the second axial drive ($A_{i,b}$) forming an effective amplification factor ($Kv_e$) for the first drive arrangement ($AT_i$) and at least one other drive arrangement ($AT_j$) which acts in a second axial direction (j).

**2.** Method according to claim 1, **characterised by** predetermining a second desired value ($x_{i,b\,soll}$) for the second axial drive ($A_{i,b}$), a common desired value ($x_{i,soll}$) for the first drive arrangement ($AT_i$) being divided into the first and second desired value ($x_{i,asoll}$, $x_{i,b\,soll}$) in accordance with the properties of the axial drives ($A_{i,a}$, $A_{i,b}$) and a predetermined travel path (7) for moving a tool (2) and/or workpiece (3) which is moved by the drive arrangements ($AT_i$, $AT_j$).

**3.** Method according to claim 1 or claim 2, **characterised in that** the value of the effective amplification factor ($Kv_e$) is predetermined to be between an amplification factor ($Kv_{i,a}$) which is optimised for the first axial drive ($A_{i,a}$) and an amplification factor ($Kv_{i,b}$) which is optimised for the second axial drive ($A_{i,b}$).

**4.** Method according to any one of the preceding claims, **characterised in that** the position ($x_{i,ist}$) of the axial drives ($A_{i,a}$, $A_{i,b}$) is controlled, the speeds ($v_{i,a}$, $v_{i,b}$) of the axial drives ($A_{i,a}$, $A_{i,b}$) being set as correcting variables.

**5.** Method according to any one of the preceding claims, **characterised in that** the second axial drive ($A_{i,b}$) is constructed on the first axial drive ($A_{i,a}$) and is moved therewith.

**6.** Method according to claim 5, **characterised in that** the first axial drive ($A_{i,a}$) is completely or partially pulse-decoupled from the second axial drive ($A_{i,b}$).

**7.** Method according to claim 5 or claim 6, **characterised in that**, from the mass ($m_{i,a}$) and acceleration ($a_{i,a}$) of the first axial drive ($A_{i,a}$) and/or the mass ($m_{i,b}$) and acceleration ($a_{i,b}$) of the second axial drive ($A_{i,b}$), correction values are determined for supplying to a power controller and/or a rotational speed controller of the first and/or the second axial drive ($A_{i,a}$, $A_{i,b}$).

**8.** Method according to any one of the preceding claims, **characterised in that**, for the movement of a tool (2) and/or workpiece (3) which is moved by the drive arrangements ($AT_i$, $AT_j$) along a predetermined travel path (7), the effective amplification factor ($Kv_e$) and/or the amplification factor ($Kv_{i,a}$) predetermined for the first axial drive ($A_{i,a}$) is controlled in accordance with the position along the travel path (7).

9. Method according to claim 8, **characterised in that** the effective amplification factor (Kv$_e$) is increased in path portions in which there is no movement, at least in one axial direction.

10. Method according to any one of the preceding claims, **characterised in that** a correcting variable v$_{i,a}$ of the first axial drive (A$_{i,a}$) is established in the first axial direction (i) as:

$$v_{i,a} = Kv_{i,a} \, \Delta x_{i,a},$$

and a correcting variable v$_{i,b}$ of the second axial drive (A$_{i,b}$) as

$$v_{i,b} = (Kv_e - Kv_{i,a}) \, \Delta x_{i,a} + Kv_e \, \Delta x_{i,b},$$

$\Delta x_{i,a}$, $\Delta x_{i,b}$ denoting the control errors of the first and second axial drive (A$_{i,a}$, A$_{i,b}$) with respect to the desired values x$_{i,a \, soll}$, x$_{i,b \, soll}$, Kv$_{i,a}$ being the amplification factor of the first axial drive (A$_{i,a}$) of the first drive arrangement (AT$_i$) in the first axial direction, and Kv$_e$ denoting the effective amplification factor.

11. Method according to any one of the preceding claims, **characterised in that** the slowest and/or the fastest axial drives (A$_{i,a}$, A$_{j,a}$) of the drive arrangements (AT$_i$, AT$_j$) of all the axial directions (i, j) of the machine tool (1) have the same amplification factor (Kv$_a$) and preferably have the same frequency response.

12. Method according to any one of the preceding claims, **characterised in that** a desired value (x$_{i,a \, soll}$, x$_{i,b \, soll}$) of the first and/or the second axial drive (A$_{i,a}$, A$_{i,b}$) of at least the first drive arrangement (AT$_i$) is modified with a sensor control signal (SR$_a$, SR$_b$).

13. Path planning unit (BP) comprising a computer program product which is configured to carry out all the steps of the method according to any one of claims 1 to 12, when the program runs on the path planning unit (BP).

14. Machine tool having:

a drive arrangement (AT$_i$) which operates in a first axial direction (i) and which has a first axial drive (A$_{i,a}$) with an associated controller (L$_{i,a}$), a control unit (PM) for predetermining a desired value (x$_{i,a \, soll}$) for the controller (L$_{i,a}$) of the first axial drive (A$_{i,a}$), and means (L$_{i,b(a)}$) for supplying a variable which is proportional to a control error ($\Delta x_{i,a}$) of the first axial drive (A$_{i,a}$) to at least a second axial drive (A$_{i,b}$) of the first drive arrangement (AT$_i$) or a controller (L$_{i,b}$) which is associated with the second axial drive (A$_{i,b}$),
**characterised in that**
the control unit (PM) is configured for predetermining a control factor for supplying the proportional value in accordance with an amplification factor (Kv$_{i,a}$) which is predetermined for the first axial drive (A$_{i,a}$) and an amplification factor (Kv$_e$) which is predetermined for the second axial drive (A$_{i,b}$), the amplification factor (KV$_e$) which is predetermined for the second axial drive (A$_{i,b}$) forming an effective amplification factor (Kv$_e$) for the first drive arrangement (AT$_i$) and at least one other drive unit (AT$_j$) which operates in a second axial direction (j).

15. Machine tool according to claim 14, **characterised in that** the control unit (PM) is configured for predetermining a second desired value (x$_{i,b \, soll}$) for the second axial drive (A$_{i,b}$), the machine tool preferably having a path planning unit (BP) which is configured to divide a common desired value (x$_{i,soll}$) for the first drive arrangement (AT$_i$) into the first and second desired value (x$_{i,a \, soll}$, x$_{i,b \, soll}$) depending on the properties of the axial drives (A$_{i,a}$, A$_{i,b}$) and a predetermined travel path (7) for moving a tool (2) and/or workpiece (3) which is moved by the drive arrangements (AT$_i$, AT$_j$) .

16. Machine tool according to claim 14 or claim 15, **characterised in that** the value of the effective amplification factor (Kv$_e$) is between an amplification factor (Kv$_{i,a}$) which is optimised for the first axial drive (A$_{i,a}$) and an amplification factor (Kv$_{i,b}$) which is optimised for the second axial drive (A$_{i,b}$).

17. Machine tool according to any one of claims 14 to 16, **characterised in that** the control error ($\Delta_{xi,a}$) of the first axial drive (A$_{i,a}$) is supplied to the second axial drive (A$_{i,b}$), and **in that** the control factor (Kv$_e$ - Kv$_{i,a}$) is the difference between the effective amplification factor ($Kv_e$) and the amplification factor ($Kv_{i,a}$) predetermined for the first axial drive ($A_{i,a}$).

18. Machine tool according to any one of claims 14 to 16, **characterised in that** the control error ($\Delta x_{i,a}$) of the first axial drive ($A_{i,a}$) is supplied to the controller ($L_{i,b}$) of the second axial drive ($A_{i,b}$) and **in that**, in order to form the control factor (($Kv_e$ - $Kv_{i,a}$) /$K_v$e) , the difference between the effective amplification factor ($Kv_e$) and the first amplification factor ($Kv_{i,a}$) is divided by the effective amplification factor ($Kv_e$).

19. Machine tool according to any one of claims 14 to 18, **characterised in that** the controllers ($L_{i,a}$, $L_{i,b}$) are position controllers for establishing the desired speed values of the axial drives ($A_{i,a}$, $A_{i,b}$) as correcting variables ($v_{i,a}$, $v_{i,b}$).

20. Machine tool according to any one of claims 14 to 19, **characterised in that** the second axial drive ($A_{i,b}$) is constructed on the first axial drive ($A_{i,a}$).

21. Machine tool according to claim 20, **characterised in that** the bearing of the second axial drive ($A_{i,a}$) on the first axial drive ($A_{i,b}$) is constructed so as to be completely or partially pulse-decoupled.

22. Machine tool according to claim 20 or claim 21, **characterised in that** the control unit (PM) is configured for producing correction values from the mass ($m_{i,a}$) and acceleration ($a_{i,a}$) of the first axial drive ($A_{i,a}$) and/or the mass ($m_{i,b}$) and acceleration ($a_{i,b}$) of the second axial drive ($A_{i,b}$), and means are provided for supplying the correction values to a power controller and/or a rotational speed controller of the first and/or second axial drive ($A_{i,a}$, $A_{i,b}$).

23. Machine tool according to any one of claims 14 or 16 to 22, **characterised by** a path planning unit (PM) which is configured for controlling the effective amplification factor ($Kv_e$) and/or the first amplification factor ($Kv_{i,a}$) of the first axial drive ($A_{i,a}$) depending on the position along the travel path (7) for the movement of a tool (2) and/or workpiece (3) which is moved by the drive arrangements ($AT_i$, $AT_j$) along a predetermined travel path.

24. Machine tool according to any one of claims 14 to 23, **characterised in that** the slowest and/or the fastest axial drives ($A_{i,a}$, $A_{j,a}$) of all the axial directions (i, j) of the machine tool (1) have a common amplification factor ($Kv_a$) and preferably have the same frequency response.

25. Machine tool according to any one of claims 14 to 24, **characterised by** at least one sensor controller ($SR_a$, $SR_b$) which modifies a desired variable ($x_{i,a \, soll}$, $x_{i,b \, soll}$) of the first and/or the second axial drive ($A_{i,a}$, $A_{i,b}$) with a sensor control signal.

## Revendications

1. Procédé pour coordonner des dispositifs d'entraînement ($AT_i$, $AT_j$) d'une machine-outil (1), qui agissent dans différentes directions axiales (i, j), englobant les étapes suivantes :

    préétablissement d'une première valeur de consigne ($x_{i,a \, soll}$) pour un premier entraînement axial régulé ($A_{i,a}$) d'un premier dispositif d'entraînement ($AT_i$) agissant dans une première direction axiale (i),
    préétablissement d'un facteur de régulation pour délivrer une grandeur, proportionnelle à une erreur de régulation ($\Delta x_{i,a}$) du premier entraînement axial régulé ($A_{i,a}$), à au moins un second entraînement axial régulé ($A_{i,b}$) du premier dispositif d'entraînement ($AT_i$),
    **caractérisé par**
    le préétablissement du facteur de régulation en fonction d'un facteur d'amplification ($Kv_{i,a}$) préétabli pour le premier entraînement axial ($A_{i,a}$), et d'un facteur d'amplification ($Kv_e$) préétabli pour le second entraînement axial ($A_{i,b}$), sachant que le facteur d'amplification ($Kv_e$), préétabli pour le second entraînement axial ($A_{i,b}$), forme un facteur effectif d'amplification ($Kv_e$) pour le premier dispositif d'entraînement ($AT_i$) et au moins un dispositif supplémentaire d'entraînement ($AT_j$) agissant dans une seconde direction axiale (j).

2. Procédé selon la revendication 1, **caractérisé par** le préétablissement d'une seconde valeur de consigne ($x_{i,b \, soll}$) pour le second entraînement axial ($A_{;,b}$), sachant qu'une subdivision d'une valeur commune de consigne ($x_{i, \, soll}$) pour le premier dispositif d'entraînement ($AT_i$), en les première et seconde valeurs de consigne ($x_{i,a \, soll}$, $x_{i,b \, soll}$), a lieu en fonction des propriétés des entraînements axiaux ($A_{i,a}$, $A_{i,b}$) et d'une courbe de trajectoire préétablie (7) en vue du mouvement d'un outil (2) et/ou d'une pièce (3) mis(e) en mouvement à travers les dispositifs d'entraînement

$(AT_i, AT_j)$.

3. Procédé selon la revendication 1 ou 2, **caractérisé par le fait que** la valeur du facteur effectif d'amplification ($Kv_e$) est préétablie entre un facteur d'amplification ($Kv_{i,a}$) optimalisé pour le premier entraînement axial ($A_{i,a}$), et un facteur d'amplification ($Kv_{i,b}$) optimalisé pour le second entraînement axial ($A_{i,b}$).

4. Procédé selon l'une des revendications précédentes, **caractérisé par le fait que** l'emplacement ($x_{i, \text{ist}}$) des entraînements axiaux ($A_{i,a}$, $A_{i,b}$) est régulé, les vitesses ($v_{i,a, vi,b}$) desdits entraînements axiaux ($A_{i,a}$, $A_{i,b}$) étant réglées en tant que grandeurs de réglage.

5. Procédé selon l'une des revendications précédentes, **caractérisé par le fait que** le second entraînement axial ($A_{i,b}$) est implanté sur le premier entraînement axial ($A_{i,a}$) et est mis en mouvement conjointement à ce dernier.

6. Procédé selon la revendication 5, **caractérisé par le fait que** le premier entraînement axial ($A_{i,a}$) est soumis à un découplage d'impulsions total ou partiel vis-à-vis du second entraînement ($A_{i,b}$).

7. Procédé selon la revendication 5 ou 6, **caractérisé par le fait que** des valeurs correctrices, affectées à la délivrance à un régulateur de courant et/ou un régulateur de vitesse angulaire du premier et/ou du second entraînement axial ($A_{i,a}$, $A_{i,b}$), sont déterminées à partir de la masse ($m_{i,a}$) et de l'accélération ($a_{i,a}$) du premier entraînement axial ($A_{i,a}$), et/ou de la masse ($m_{i,b}$) et de l'accélération ($a_{i,b}$) du second entraînement axial ($A_{i,b}$).

8. Procédé selon l'une des revendications précédentes, **caractérisé par le fait que**, en vue du mouvement, le long d'une courbe de trajectoire préétablie (7), d'un outil (2) et/ou d'une pièce (3) mis(e) en mouvement par les dispositifs d'entraînement ($AT_i$, $AT_j$), le facteur effectif d'amplification ($Kv_e$), et/ou le facteur d'amplification ($Kv_{i,a}$) préétabli pour le premier entraînement axial ($A_{i,a}$), est (sont) modifié(s) en fonction de l'emplacement le long de ladite courbe de trajectoire (7).

9. Procédé selon la revendication 8, **caractérisé par le fait que** le facteur effectif d'amplification ($Kv_e$) est augmenté sur des segments de trajectoire sur lesquels aucun mouvement ne s'opère, au moins dans une direction axiale.

10. Procédé selon l'une des revendications précédentes, **caractérisé par le fait qu'**une grandeur de réglage $V_{i,a}$ du premier entraînement axial ($A_{i,a}$), dans la première direction axiale (i), est établie comme suit :

$$v_{i,a} = Kv_{i,a} \, \Delta x_{i,a},$$

et une grandeur de réglage $v_{i,b}$ du second entraînement axial ($A_{i,b}$) est établie comme suit :

$$v_{i,b} = (Kv_e - Kv_{i,a}) \, \Delta x_{i,a} + Kv_e \, \Delta x_{i,b},$$

sachant que $\Delta x_{i,a}$, $\Delta x_{i,b}$ désignent les erreurs de régulation des premier et second entraînements axiaux ($A_{i,a}$, $A_{i,b}$) vis-à-vis des valeurs de consigne $x_{i,a \, soll}$, $x_{i,b \, soll}$ ; que $K \, v_{i,a}$ est le facteur d'amplification du premier entraînement axial ($A_{i,a}$) du premier dispositif d'entraînement ($AT_i$) dans la première direction axiale ; et que $Kv_e$ désigne le facteur effectif d'amplification.

11. Procédé selon l'une des revendications précédentes, **caractérisé par le fait que** les entraînements axiaux les plus lents et/ou les entraînements axiaux les plus rapides ($A_{i,a}$, $A_{j,a}$) des dispositifs d'entraînement ($AT_i$, $AT_j$) de toutes les directions axiales (i, j) de la machine-outil (1) présentent le même facteur d'amplification ($Kv_a$) et offrent, de préférence, une allure de fréquence identique.

12. Procédé selon l'une des revendications précédentes, **caractérisé par le fait qu'**une valeur de consigne ($x_{i,a \, soll}$, $x_{i,b \, soll}$) du premier et/ou du second entraînement axial ($A_{i,a}$, $A_{i,b}$) d'au moins le premier dispositif d'entraînement ($AT_i$) est modifiée par un signal ($SR_a$, $SR_b$) de régulation de détection.

13. Unité (BP) de planification de voie, comprenant un produit à programme d'ordinateur réalisé pour la mise en oeuvre de toutes les étapes du procédé selon l'une des revendications 1 à 12 lorsque le programme se déroule sur ladite unité (BP) de planification de voie.

14. Machine-outil comprenant :

un dispositif d'entraînement (AT$_i$) agissant dans une première direction axiale (i) et comportant un premier entraînement axial (A$_{i,a}$) à régulateur associé (L$_{i,a}$) ; une unité de commande (PM) conçue pour la délivrance préalable d'une valeur de consigne (x$_{i,a\ soll}$) audit régulateur (L$_{i,a}$) dudit premier entraînement axial (A$_{i,a}$) ; ainsi que des moyens (L$_{i,b(a)}$) pour délivrer une grandeur, proportionnelle à une erreur de régulation (Δx$_{i,a}$) du premier entraînement axial (A$_{i,a}$), à au moins un second entraînement axial (A$_{i,b}$) du premier dispositif d'entraînement (AT$_i$), ou à un régulateur (L$_{i,b}$) associé audit second entraînement axial (A$_{i,b}$), **caractérisée par le fait que** l'unité de commande (PM) est réalisée pour préétablir un facteur de régulation, en vue de la délivrance de la grandeur proportionnelle en fonction d'un facteur d'amplification (Kv$_{i,a}$) préétabli pour le premier entraînement axial (A$_{i,a}$), et d'un facteur d'amplification (Kv$_e$) préétabli pour le second entraînement axial (A$_{i,b}$), sachant que le facteur d'amplification (Kv$_e$), préétabli pour le second entraînement axial (A$_{i,b}$), forme un facteur effectif d'amplification (Kv$_e$) pour le premier dispositif d'entraînement (AT$_i$) et au moins un dispositif supplémentaire d'entraînement (AT$_j$) agissant dans une seconde direction axiale (j).

15. Machine-outil selon la revendication 14, **caractérisée par le fait que** l'unité de commande (PM) est conçue pour la délivrance préalable d'une seconde valeur de consigne (x$_{i,b\ soll}$) au second entraînement axial (A$_{i,b}$), ladite machine-outil étant de préférence munie d'une unité (BP) de planification de voie qui est prévue pour exécuter une subdivision d'une valeur commune de consigne (x$_{i,\ soll}$) pour le premier dispositif d'entraînement (AT$_i$), en les première et seconde valeurs de consigne (x$_{i,a\ soll}$, x$_{i,b\ soll}$), en fonction des propriétés des entraînements axiaux (A$_{i,a}$, A$_{i,b}$) et d'une courbe de trajectoire préétablie (7) en vue du mouvement d'un outil (2) et/ou d'une pièce (3) mis(e) en mouvement à travers les dispositifs d'entraînement (AT$_i$, AT$_j$).

16. Machine-outil selon la revendication 14 ou 15, **caractérisée par le fait que** la valeur du facteur effectif d'amplification (Kv$_e$) se situe entre un facteur d'amplification (Kv$_{i,a}$) optimalisé pour le premier entraînement axial (A$_{i,a}$), et un facteur d'amplification (Kv$_{i,b}$) optimalisé pour le second entraînement axial (A$_{i,b}$).

17. Machine-outil selon l'une des revendications 14 à 16, **caractérisée par le fait que** l'erreur de régulation (Δx$_{i,a}$) du premier entraînement axial (A$_{i,a}$) est délivrée au second entraînement axial (A$_{i,b}$) ; et **par le fait que** le facteur de régulation (Kv$_e$- Kv$_{i,a}$) est la différence entre le facteur effectif d'amplification (Kv$_e$) et le facteur d'amplification (Kv$_{i,a}$) préétabli pour ledit premier entraînement axial (A$_{i,a}$).

18. Machine-outil selon l'une des revendications 14 à 16, **caractérisée par le fait que** l'erreur de régulation (Δx$_{i,a}$) du premier entraînement axial (A$_{i,a}$) est délivrée au régulateur (L$_{i,b}$) du second entraînement axial (A$_{i,b}$) ; et **par le fait que**, en vue de former le facteur de régulation ((Kv$_e$ - Kv$_{i,a}$)/Kv$_e$), la différence entre le facteur effectif d'amplification (Kv$_e$), et le premier facteur d'amplification (Kv$_{i,a}$), est divisée par ledit facteur d'amplification (Kv$_e$).

19. Machine-outil selon l'une des revendications 14 à 18, **caractérisée par le fait que** les régulateurs (L$_{i,a}$, L$_{i,b}$) sont des régulateurs de position conçus pour établir, en tant que grandeurs de réglage (v$_{i,a}$, v$_{i,b}$), les valeurs de consigne de vitesse des entraînements axiaux (A$_{i,a}$, A$_{i,b}$).

20. Machine-outil selon l'une des revendications 14 à 19, **caractérisée par le fait que** le second entraînement axial (A$_{i,b}$) est implanté sur le premier entraînement axial (A$_{i,a}$).

21. Machine-outil selon la revendication 20, **caractérisée par le fait que** le système de montage du second entraînement axial (A$_{i,b}$), sur le premier entraînement axial (A$_{i,a}$), est réalisé avec découplage d'impulsions total ou partiel.

22. Machine-outil selon la revendication 20 ou 21, **caractérisée par le fait que** l'unité de commande (PM) est conçue pour produire des valeurs correctrices à partir de la masse (m$_{i,a}$) et de l'accélération (a$_{i,a}$) du premier entraînement axial (A$_{i,a}$), et/ou de la masse (m$_{i,b}$) et de l'accélération (a$_{i,b}$) du second entraînement axial (A$_{i,b}$) ; et des moyens sont prévus pour délivrer lesdites valeurs correctrices à un régulateur de courant et/ou à un régulateur de vitesse angulaire du premier et/ou du second entraînement axial (A$_{i,a}$, A$_{i,b}$).

23. Machine-outil selon l'une des revendications 14 ou 16 à 22, **caractérisée par** une unité (PM) de planification de voie qui est conçue pour modifier, en vue du mouvement d'un outil (2) et/ou d'une pièce (3) mis(e) en mouvement par les dispositifs d'entraînement ($AT_i$, $AT_j$) le long d'une courbe de trajectoire préétablie, le facteur effectif d'amplification ($Kv_e$) et/ou le premier facteur d'amplification ($Kv_{i,a}$) du premier entraînement axial ($A_{i,a}$), en fonction de l'emplacement le long de ladite courbe de trajectoire (7).

24. Machine-outil selon l'une des revendications 14 à 23, **caractérisée par le fait que** les entraînements axiaux les plus lents et/ou les entraînements axiaux les plus rapides ($A_{i,a}$, $A_{i,a}$) de toutes les directions axiales (i, j) de ladite machine-outil (1) présentent un facteur d'amplification commun ($Kv_a$) et possèdent, de préférence, une allure de fréquence identique.

25. Machine-outil selon l'une des revendications 14 à 24, **caractérisée par** au moins un régulateur de détection ($SR_a$, $SR_b$) qui modifie une grandeur de consigne ($x_{i,a\ soll}$, $X_{i,b\ soll}$) du premier et/ou du second entraînement axial ($A_{i,a}$, $A_{i,b}$) avec un signal de régulation de détection.

**Fig. 1a**

**Fig. 1b**

Fig. 2

## Fig. 3

## Fig. 4

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 05002414 A
- US 5801939 A

- DE 19810996 A1

**In der Beschreibung aufgeführte Nicht-Patentliteratur**

- **Staroselsky et al.** Twostage Actuation for Improved Accuracy of Contouring. *Proceedings of the 1998 American Control Conference, Atlanta,* 15. Juni 1998, vol. 1, 127-132